# EUROPEAN PATENT APPLICATION

(11) **EP 2 693 183 A1**
(43) Date of publication of application: **05.02.2014**
(21) Application number: 12178926.7
(22) Date of filing: 01.08.2012
(51) Int. Cl.: G01L 9/00, G01L 19/02, G01L 19/00, G01P 15/097

(54) **ON-CHIP RESONANT ACCELERATION AND PRESSURE SENSOR**

(71) Applicant: Honeywell International Inc., Morristown, NJ 07962-2245 (US)
(72) Inventor: Cobianu, Cornel, Morristown, NJ 07962-2245 (US)
(74) Representative: Houghton, Mark Phillip

(57) **Abstract**

An illustrative combination acceleration and pressure sensor apparatus that is configured to include a differential resonant pressure sensor and a differential resonant acceleration sensor on a single chip. The combination sensor apparatus may include a substrate having a sense diaphragm, a first single crystal resonator and a second single crystal resonator supported by the sense diaphragm, and a third single crystal resonator and a fourth single crystal resonator supported by the substrate and laterally spaced from the sense diaphragm. An inertial mass may be physically coupled to the third resonator and fourth resonator and be located between the third resonator and the fourth resonator. The resonators of the sensor apparatus may include double-ended tuning fork and vibrating gate transistors-that utilize MEMS/NEMS, MOSFET and/or SOI CMOSFET technologies. In some cases, the illustrative combination sensor apparatus may include a differential resonant pressure sensor, a differential resonant acceleration sensor and a differential resonant gyro sensor on a single chip.

## Description

### TECHNICAL FIELD

This disclosure generally relates to sensors, and more particularly, to on-chip combination of pressure, rotation rate and/or acceleration sensors.

### BACKGROUND

Pressure sensors are often used to sense an external pressure applied to the sensors and provide an output signal representative of the sensed applied pressure. Acceleration sensors are often used to sense an acceleration applied to the sensors and provide an output signal representative of the detected acceleration of the sensors. Such sensors can be used in a wide variety of applications, including medical applications, consumer electronic applications, industrial applications, aircraft applications, military applications as well as other applications.

### SUMMARY

This disclosure generally relates to sensors, and more particularly, to sensors that include a pressure sensor and/or an acceleration sensor. In one example, a combination of pressure sensor and acceleration sensors may be provided on a single chip. The combination of pressure sensor and acceleration sensors may include a substrate having a sense diaphragm, a first resonator and a second resonator supported by the sense diaphragm, a third resonator and a fourth resonator laterally spaced from the sense diaphragm and supported by the same substrate, and an inertial mass mechanically coupled to the third resonator and the fourth resonator. In some cases, each of the resonators may include a vibrating gate transistor, where the vibrating gate transistor may utilize metal-oxide-semiconductor field-effect ("MOSFET") or silicon-on-insulator ("SOI") complementary metal-oxide-semiconductor field-effect transistor ("CMOSFET") technologies, to name a few.

In some instances, the first resonator of the pressure sensor may include a first vertical MOSFET transistor and the second resonator may include a second vertical MOSFET transistor on the substrate, where each vertical MOSFET transistor may includes a vibrating gate as a part of one or more interconnected vibrating beams. Each of the vibrating beams may be secured to the sense diaphragm of the substrate with one or more anchors, and may be configured to vibrate in a plane that is substantially parallel to the substrate, where the vibrating beams may be substantially conductive and may include a side wall that extends substantially perpendicular to the substrate. A first vibrating beam containing the gate of the first vertical MOSFET transistor may be configured to have a resonant frequency that is dependent on a tensile stress in the pressure sense diaphragm. A second vibrating beam containing the gate of the second vertical MOSFET transistor may be configured to have a resonant frequency that is dependent on a compressive stress in the pressure sense diaphragm.

In some cases, the acceleration sensor may include a first vertical MOSFET transistor body and a second vertical MOSFET transistor body on the substrate, where each vertical MOSFET transistor may include a vibrating gate as a part of one or more interconnected vibrating beams. Each of the vibrating beams may be secured to the substrate with one or more anchors. The acceleration sensor may have at least one inertial vibrating mass that may be configured to vibrate in a plane that is substantially parallel to the substrate, where the vibrating beams may be substantially conductive and may include a side wall that extends substantially perpendicular to the substrate. Each of the vibrating beams containing the vibrating gate of the first and second vertical MOSFET transistors may be configured to have a resonance frequency that is dependent on the acceleration applied to the substrate along a predetermined acceleration axis.

Illustratively, the combination sensor may be a SOI-CMOSFET MEMS/NEMS fabrication. In such a fabrication, a sense diaphragm may be formed from a provided SOI wafer having a silicon substrate, a buried oxide layer on the silicon substrate, and a silicon single crystal layer on the buried oxide layer. In some instances, the sense diaphragm may be formed by etching away at least part of the silicon substrate of the SOI wafer, leaving at least some of the silicon substrate, the buried oxide layer, and the single crystal layer. Further, the fabrication may include forming a vibrating gate SOI-CMOSFET resonant differential pressure sensor on the sense diaphragm and/or forming a vibrating gate SOI-CMOSFET resonant differential acceleration sensor on the SOI chip laterally adjacent to the pressure sense diaphragm. As another example, the fabrication may include forming a vibrating gate SOI-CMOSFET resonant differential pressure sensor on the sense diaphragm, forming one or more vibrating gate SOI-CMOSFET resonant differential acceleration sensors on the SOI chip laterally adjacent the sense diaphragm, and forming a vibrating gate SOI-CMOSFET resonant differential gyro sensor on the SOI chip laterally adjacent to the sense diaphragm and the one or more SOI-CMOSFET resonant differential acceleration sensors.

The preceding summary is provided to facilitate an understanding of some of the innovative features unique to the present disclosure and is not intended to be a full description. A full appreciation of the disclosure can be gained by taking the entire specification, claims, drawings, and abstract as a whole.

### BRIEF DESCRIPTION OF THE DRAWINGS

The disclosure may be more completely understood in consideration of the following description of various embodiments in connection with the accompanying drawings, in which:
Figure 1 is a schematic perspective view of an illustrative resonant differential gyro sensor and pressure sensor system;
Figure 2A is a schematic top view of an illustrative double ended tuning fork (DETF) resonator exposed to tensile stress of the illustrative resonant differential gyro sensor and pressure sensor system of Figure 1, containing a vibrating gate MOSFET transistor for resonance detection;
Figure 2B is a schematic top view of an illustrative double ended tuning fork resonator exposed to compressive stress of the illustrative resonant gyro sensor and pressure sensor system of Figure 1, containing a vibrating gate MOSFET transistor for resonance detection;
Figure 3 is a schematic cross-section of the illustrative double ended tuning fork resonator exposed to compressive stress and detection transistor of Figure 2B taken through line 3-3; and
Figure 4 is a schematic top view of the illustrative resonant differential gyro sensor and pressure sensor system of Figure 1;
Figure 5 is a schematic top view of an illustrative differential resonant pressure sensor;
Figure 6 is a schematic top view of an illustrative differential resonant gyro sensor;
Figure 7 is a schematic process steps for fabricating an illustrative differential resonant gyro sensor and pressure sensor system;
Figure 8 shows a cross-sectional side view of an illustrative differential resonant pressure sensor and acceleration sensor system including the double ended tuning fork resonators illustrated in Figures 2A and 2B;
Figure 9 shows a schematic top view of an illustrative differential resonant pressure sensor and acceleration sensor system of Figure 8;
Figure 10 is a schematic top view of an illustrative differential resonant acceleration sensor of Figures 8 and 9, indicating the stresses applied to resonators when an acceleration is applied to chip on along the x axis ;
Figure 11 shows a schematic top view of an illustrative differential resonant pressure sensor and acceleration sensor system including two or more acceleration sensors;
Figure 12 shows a schematic top view of an illustrative differential resonant pressure sensor, a two axis differential resonant gyro sensor, and acceleration sensor system, measuring acceleration and/or rotation rate on x and y directions;
Figure 13A shows a cross-sectional side view of an illustrative combination acceleration and pressure sensor including the illustrative sense die of Figures 8, 9, 11, and 12;
Figure 13B shows a package view of the illustrative pressure sensor of Figure 13A;
Figure 13C shows another package view of an illustrative pressure sensor of Figure 13A; and
Figure 14 shows a flowchart showing an illustrative technique for fabricating the illustrative resonant acceleration sensor and pressure sensor system of Figures 8, 9, 11, 12, and 13A.
Figure 15 shows a flowchart showing an illustrative technique for fabricating the illustrative resonant acceleration sensor, gyro sensor and pressure sensor system of Figure 12.

While the disclosure is amenable to various modifications and alternative forms, specifics thereof have been shown by way of example in the drawings and will be described in detail. It should be understood, however, that the intention is not to limit aspects of the disclosure to the particular embodiments described. On the contrary, the intention is to cover all modifications, equivalents, and alternatives falling within the spirit and scope of the disclosure.

### DESCRIPTION

The following description should be read with reference to the drawings wherein like reference numerals indicate like elements throughout the several views. The description and drawings show several embodiments which are meant to be illustrative of the claimed disclosure.

For convenience, the present disclosure may be described using relative terms including, for example, left, right, top, bottom, front, back, upper, lower, up, down, first, second, third and fourth, as well as others. It is to be understood that these terms are merely used for illustrative purposes and are not meant to be limiting in any manner.

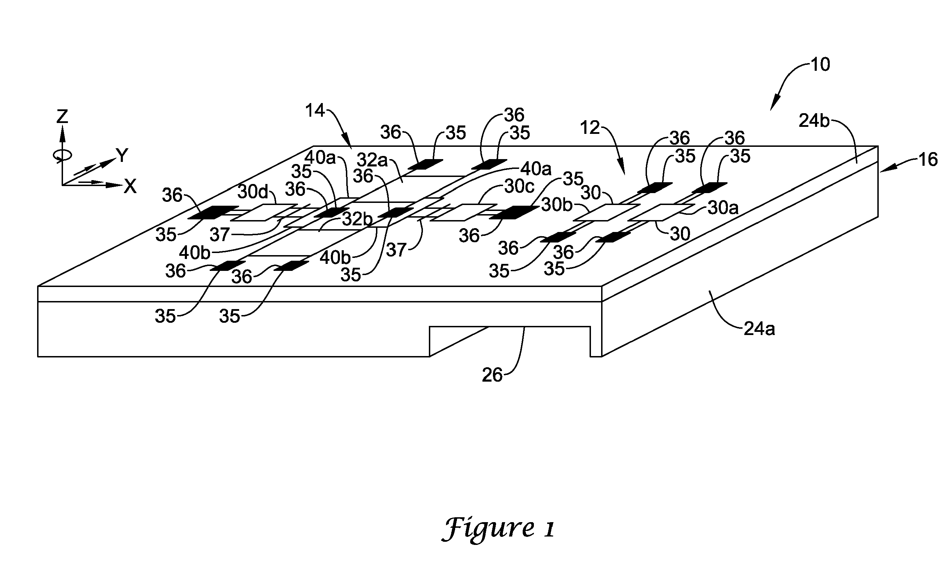

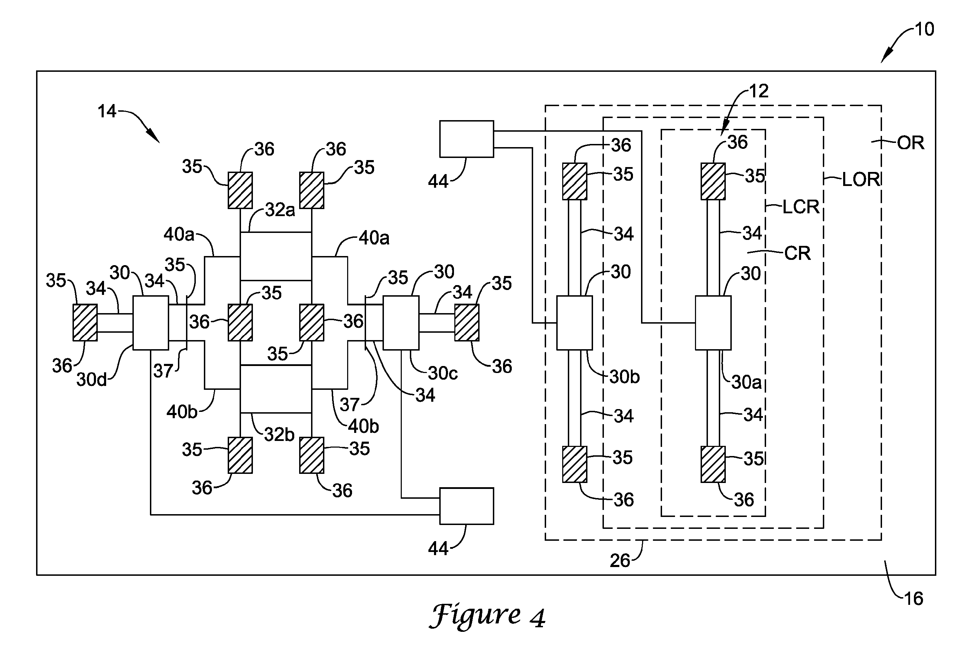

Silicon micro-electromechanical system ("MEMS") technology and/or silicon nano-electromechanical system ("NEMS") technology may be used to manufacture sensors, including the development and packaging of one or more sensors on one or more chips 16, as shown in Figure 1, for a variety of uses and/or applications. In some cases, silicon MEMS technology and/or silicon NEMS technology may, at least partially facilitate interaction or fusion of two or more sensors within a sensor system to create a combination or "combo" sensor apparatus 10, as shown in Figures 1 and 4.

MEMS and/or NEMS technology may be utilized to produce a combination sensor 10 configured to sense two or more similar measurands or dissimilar measurands (e.g., an applied pressure and an applied rotation rate) in a variety of applications. For example, such a combination sensor apparatus 10 may be used in wireless applications; medical applications; athletic applications; aerospace applications, where atmospheric pressure may be easily converted to altitude; or other applications, as desired. Moreover, utilizing MEMS and/or NEMS technology may facilitate combining and/or interconnecting different sensors from one or more original equipment manufacturer ("OEM") vendors, at the package level, for one or more of a variety of applications (e.g., wireless and/or other compact applications).

Illustratively, a combo sensor apparatus 10 utilizing such MEMS/NEMS technology may be a combination of a pressure sensor 12 and a rotation rate or force sensor (e.g., a gyro sensor 14) on the same single chip 16, or a combination of one or more other sensors (acceleration sensor, temperature sensor, humidity sensor, chemical sensor, etc.) on a single chip 16. Alternatively, or in addition, similar MEMS/NEMS technology may be used to make individual sensors (e.g., a single sensor per chip 16).

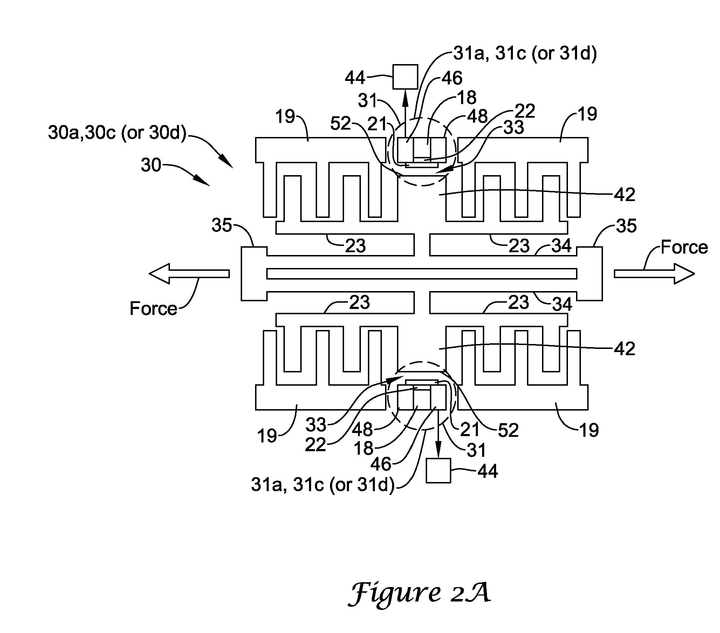

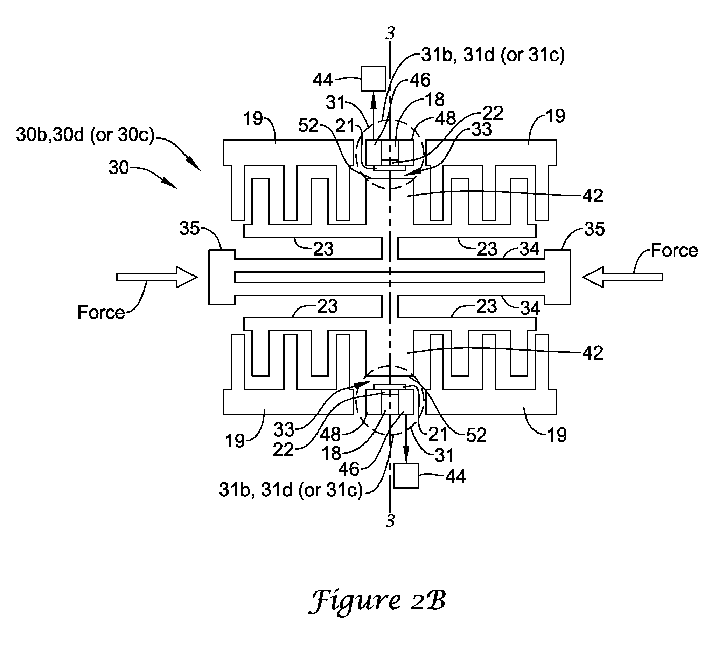

An operating principle of the illustrative resonant pressure sensor 12, resonant gyro sensor 14 or resonant combo pressure sensor and gyro sensor apparatus 10 may include the ability to detect one or more measurands that is/are capable of changing a mechanical stiffness of one or more vibrating elements 34, shown in Figures 2A and 2B, of the corresponding pressure sensor 12 and/or gyro sensor 14 and thus, is/are capable of affecting a resonance frequency of that vibrating element 34. In some cases, the one or more measurands (e.g., a pressure applied to the sensor 10 and/or a rotation rate or rotation force of the combo sensor apparatus 10) may be measured by detecting frequency related-voltage through detection circuits based on vibrating gate MOSFET transistors configured to respond (e.g., change the frequency of a drain current) to an input pressure and/or rotation rate applied to the combo sensor apparatus 10.

In some instances, the pressure sensor 12, the gyro sensor 14 and/or the resonant combo pressure sensor and gyro sensor apparatus 10 may use a differential approach to pressure detection and/or rotation rate detection, which may help cancel temperature variation effects, reduce long term drift due to material aging and thus improve sensitivity and performance of the sensors 10, 12, 14 over typical sensors in the art, and/or otherwise minimize common mode drift and/or reduce noise. For example, in some cases, two resonators 30 may be used for detecting a pressure applied to the resonant combo sensor apparatus 10, and two or more resonators 30 may be used for detecting a rotation rate of the resonant combo sensor 10. The two resonators configured to detect the pressure applied to the combo sensor 10 may be used to differentially detect pressure applied to a chip substrate 24 on which the resonant pressure sensor 12 and the resonant gyro sensor 14 may be supported, and two resonators 30 may be used to differentially detect rotation of the chip substrate 24 on which the pressure sensor 12 and the gyro sensor 14 may be supported (e.g., one resonator 30 may be configured to detect tensile stress of the chip substrate 24 and a different resonator 30 may be configured to detect compressive stress).

When the pressure applied to the chip 16 and the rotation rate of the chip 16 are differentially detected, a differential resonant frequency may be calculated between a respective resonator 30 exposed to tensile stress and a respective resonator 30 exposed to compressive stress of each of the pressure sensor 12 and the gyro sensor 14, where in the absence of a pressure applied to the chip 16 and a rotation of the chip 16, the resonance frequency of the four resonators may be substantially the same. Due to taking the differential resonance frequency between the resonator 30 exposed to tensile stress and the resonator 30 exposed to compressive stress, a sensitivity of the frequency may be substantially doubled for each of the pressure sensor 12 and the gyro sensor 14 when compared to gyro sensors and/or pressure sensors that only measure changes in one of either the compressive stress or changes in the tensile stress. The added sensitivity is realized, at least in part, because the resonators 30 of the pressure sensor 12 and the resonators 30 of the gyro sensor 14 are configured such that when the tensile stress increases, the resonance frequency of the resonator 30 measuring changes in tensile stress increases, and when the compressive stress increases, the resonance frequency of the resonator 30 measuring compressive stress decreases. Thus, measuring differential resonance frequency changes due to tensile stress and compressive stress increases the sensitivity of the sensor apparatus 10. Among other useful attributes, such differential resonance frequency calculations may be beneficial for canceling "common mode signals" coming from temperature, packaging stress, material ageing or technology variations in the illustrative combo sensor 10 (e.g., the system may substantially eliminate any common mode acceleration on the x-axis wherein the rotation rate is detected by a Coriolis force effect), reducing low frequency drift of the illustrative combo sensor 10 caused by aging materials and environmental conditions (e.g., temperature variations), providing general relatively high sensor accuracy, etc. While differential resonance sensors may be used, it is contemplated that in some case, a single ended resonance sensor may be used, depending on the applications.

Illustratively, as shown in Figures 1 and 4 and as discussed here, a sensor apparatus 10 may be a combo sensor with two or more sensors 12, 14 positioned on a single chip 16. Among other features, the combo sensor 10 may include a chip substrate 24 having and/or forming a sense diaphragm 26; a first resonator 30a and a second resonator 30b, where both resonators 30a, 30b may be substantially supported by the sense diaphragm 26; a third resonator 30c and a fourth resonator 30d, where both resonators 30c, 30d may be laterally spaced from the sense diaphragm 26 and supported by the chip substrate 24. In some cases (e.g., when the sensor 10 includes a gyro sensor), the combo sensor 10 may include a first proof or inertial vibrating mass 32a and a second proof or inertial vibrating mass 32b, where a first lever arm 40a (e.g., a first proof or inertial vibrating mass lever arm) may interconnect the first inertial vibrating mass 32a to the third resonator 30c and the fourth resonator 30d and a second lever arm 40b (e.g., a second proof or inertial vibrating mass lever arm) may interconnect the second proof or inertial vibrating mass 32b to the third resonator 30c and the fourth resonator 30d. The first lever arm 40a and the second lever arm 40b may be configured to obtain a lever differential mechanism, which may amplify Coriolis forces acting on the two proof or inertial vibrating masses 32a, 32b by the rotation of the chip 16 and may reject parasitic common mode inertial forces caused by an acceleration applied to the same proof or inertial masses 32a, 32b on the sense direction with the Coriolis force. Such a lever differential mechanism is able to sum up only the Coriolis force applied to each proof or inertial mass 32a, 32b and the resultant Coriolis force is transmitted to the anchors 35 of the two resonators 30c, 30d for measuring differentially the rotation rate applied to the chip 16.

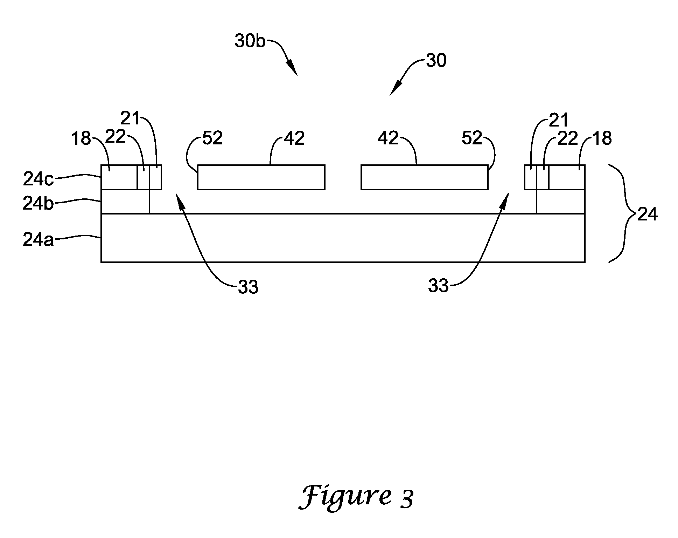

In some instances, the chip substrate 24 may be a silicon-on-insulator ("SOI") substrate, as shown in Figure 3. A SOI substrate may include a first layer or substrate 24a (e.g., a silicon substrate), a second layer or oxide layer 24b (e.g., a buried oxide layer or "BOX" layer) on the substrate 24a, and a third layer or single crystal layer 24c (e.g., a silicon single crystal layer, or epi layer) on the oxide layer 24b. Alternatively, or in addition, the chip substrate 24 may include less than or greater than three layers, where those layers may or may not include a silicon substrate 24a, a BOX layer 24b and/or a silicon single crystal layer 24c. In some cases, the chip substrate 24 may be part of a larger wafer (not shown here) which may be diced or divided in any manner to form several chips 16.

In some illustrative embodiments, the third layer or silicon single crystal layer 24c may be configured such that one or more (e.g., each) of the first resonator 30a, the second resonator 30b, the third resonator 30c, and the fourth resonator 30d may be at least partially formed by the single crystal layer 24c (e.g., formed in and/or of the silicon single crystal layer 24c). Illustratively, the resonators 30a-30d at least partially formed by the single crystal layer 24c may include one or more portions of the single crystal layer 24c and may be formed to suspend above the silicon substrate layer 24a, as shown in Figure 3. In some instances, the suspended portion(s) of resonators 30a-30d made of the single crystal layer 24c may be at least partially formed by patterning the single crystal layer 24c and removing part of the oxide layer 24b to suspend at least part of the patterned single crystal layer 24c above the silicon substrate layer 24a. Further, although the layer(s) of the substrate 24 may be made of particular materials, as discussed above, and may be layered in one or more particular order with respect to the other layers, as discussed above, the number of the layers, the material of the layers, the size of the layers, and the order of the layers may be chosen as desired.

In some instances, each resonator 30 may include a vibrating gate MOSFET transistor 31 as shown in Figs. 2A and 2B, where such a transistor may be made with MOSFET or SOI-CMOSFET technology. Such a disclosed resonator may have a resonance frequency shift as a function of an external measurand to be detected. In some cases, the vibrating gate MOSFET transistor 31 may be used for the detection of changes in resonance frequency of one or more of the first resonator 30a, the second resonator 30b, the third resonator 30c, and the fourth resonator 30d. For example, when one or more of an external pressure and a rotation rate is applied to a combo sensor apparatus 10 having a pressure sensor 12 and a gyro sensor 14 on a chip 16, the vibrating gate MOSFET transistors may be configured to facilitate the detection of changes in resonance frequency of one or more of the first resonator 30a, the second resonator 30b, the third resonator 30c, and the fourth resonator 30d, where the changes in resonance frequency may be proportional or otherwise related to the pressure applied to the combo sensor apparatus 10 and/or the rotation rate of the combo sensor apparatus 10.

In some instances, the first resonator 30a may comprise a first vibrating MOSFET gate transistor 31a, the second resonator 30b may comprise a second vibrating MOSFET gate transistor 31b, the third resonator 30c may comprise a third vibrating gate MOSFET transistor 31c, the fourth resonator 30d may comprise a fourth vibrating gate MOSFET transistor 31d, where the first proof or inertial vibrating mass 32a and the second proof or inertial vibrating mass 32b may suspend between the third resonator 30c and the forth resonator 30d containing the third vibrating gate MOSFET transistor 31c and the fourth vibrating gate MOSFET transistor 31d, respectively. The third vibrating gate MOSFET transistor 31c and the fourth vibrating gate MOSFET transistor 31d may be positioned on the chip substrate 24 such that they are laterally spaced from the position of the first and second transistor bodies 31a, 31b on the substrate or wafer 24.

In an illustrative instance, the combination resonant pressure and rotation rate (e.g., gyro) sensor apparatus 10 formed with SOI CMOSFET technology and having vibrating gate MOSFET transistors 31 may utilize an electrically biased vibrating gate 42 in a first plane (e.g., a horizontal plane) and an electrical conduction channel 22 induced by a field effect on a sidewall of the fix region 18, shown in Figure 3, in a second plane (e.g., a vertical plane relative to the substrate 24a), where the second plane may be substantially perpendicular to the first plane or at any other angle with respect to the first plane, as desired. Such an illustrative sensor apparatus 10 may be used for detecting any of several measurands. For example, the illustrative sensor may be used for detecting rotation rate/force, acceleration, and/or pressure and may be used in various applications (e.g., portable applications). Moreover, due to frequency detection principles, the illustratively disclosed combination resonant pressure and gyro sensor apparatus 10, as further described herein, may be configured to have a quasi-digital character, high detection sensitivities, and high resolution results, while having a stable configuration.

As shown in Figure 3, the vibrating gate 42 of the vibrating gate MOSFET transistor 31 of each of the first resonator 30a, the second resonator 30b, the third resonator 30c, and the fourth resonator 30d may include one or more portions of the suspended vibrating combs 23 and suspended vibrating beams 34 of the above resonators, shown in Figures 2A and 2B. In Figure 2A, a top view is shown of a resonator 30 having a vibrating gate MOSFET transistor 31 that receives tensile stress transferred from the chip substrate 24 through anchors 36, 37, in the presence of the external measurand to be detected. In Figure 2B, a top view is shown of a resonator 30 having a vibrating gate MOSFET transistor 31 that receives compressive stress transferred from the chip substrate 24 through anchors 36, 37, in the presence of the external measurand to be detected. As shown in Figures 1, 2A, 2B and 4, the resonators 30 may include one or more anchors 35 (e.g., fixed anchors 36 and/or mobile anchors 37), one or more tines or suspended vibrating beams 34 (e.g., two, four, or six suspended tines or vibrating beams 34), one or more vibrating gates 42 (e.g., two, four, or six vibrating gates 42), one or more suspended combs or prongs 23 (e.g., two, four, or six suspended combs or prongs 23), and one or more secured combs or prongs 19 (e.g., two, four, or six secured combs or prongs 19 23-) that may be n-type doped. Further, spaced from the n-type doped vibrating gates 42, the resonators 30 may include a gate oxide 21 in a vertical plane, as shown in Figure 3, where the gate oxide layer(s) 21 and the vibrating gates 42 may be parts of the vibrating gate MOSFET transistor 31. A fix portion 18 of the silicon of the resonators 30 positioned behind the gate oxide 21 and to which the gate oxide 21 may be attached, may be a p-type doped single crystal silicon film. As the gate is vibrating in air or vacuum, this air or vacuum may form an additional dielectric layer in a gap 33 between vibrating gate and the gate oxide 21. As shown in Figs 2A and 2B, the p-type region is located between fix source region 46 and fix drain region 48, where both source and drain regions are n-type doped single crystal silicon regions. When a dc gate voltage that is higher than a certain threshold voltage is applied on the vibrating gate 42, a conduction region or channel 22 of n-type may be induced by field effect in this region 18, which may electrically connect the source and drain regions, and the vibrating gate MOSFET transistor 31 may be in the ON state. This electric field induced n-type region forms the so-called conduction channel 22 of the vibrating gate MOSFET transistor 31. Further, the channel region 22 may be located in the vertical plan and behind or under the gate oxide 21, as shown in Figures 2A, 2B and 3. Such a MOSFET transistor 31 may be biased using dc (direct current) voltages, but, due to the gate vibration, an electric field varying with the frequency of the mechanical resonance may be obtained, and thus, a drain current varying with frequency of the mechanical resonance of the resonator 30 may be obtained.

To facilitate forming the suspended beams 34 (e.g. the suspended beams 34 may include the suspended prongs 23 and the vibrating gate 42, etc) of the resonators 30, a portion of the third layer 24c and the second layer 24b may be removed in order to obtain suspended vibrating beams 34 (e.g., silicon suspended beams or tines) from the third layer 24c that extend between fixed anchors 36 (e.g., silicon fixed anchors) and/or mobile anchors (e.g., silicon mobile anchors) 37, where the one or more fixed anchors 36 and/or the one or more mobile anchors 37 may be in communication with and/or connected to the suspended beams 34 and one or more layers of the chip substrate 24. Further, one or more fixed anchors 36 may support the first proof or inertial vibrating mass 32a and the second proof or inertial vibrating mass 32b, as shown in Figure 1. In some cases, the anchors 36, 37 may be formed by patterning one or more of the first layer 24a, the second layer 24b, and the third layer 24c of the chip substrate 24. As a result of the communication between the anchors 36, 37 and the suspended beams 34, any stress (e.g., tensile stress and/or compressive stress) on or of the chip substrate 24 (e.g. due to an applied pressure), and/or stress cause provide on the resonators (e.g. due to an applied rotation) may be transferred therefrom to the suspended beams 34 and the suspended prongs 23 of the resonators, and thus to the vibrating gate 42 of the vibrating gate transistors. Therefore, due to the external measurand to be detected, a change in the mechanical resonance frequency of vibrating gate 42 may be obtained and, by varying a field effect with the same frequency, a change in the (electrical) frequency of the corresponding drain current of the vibrating gate MOSFET transistor 31 may be obtained.

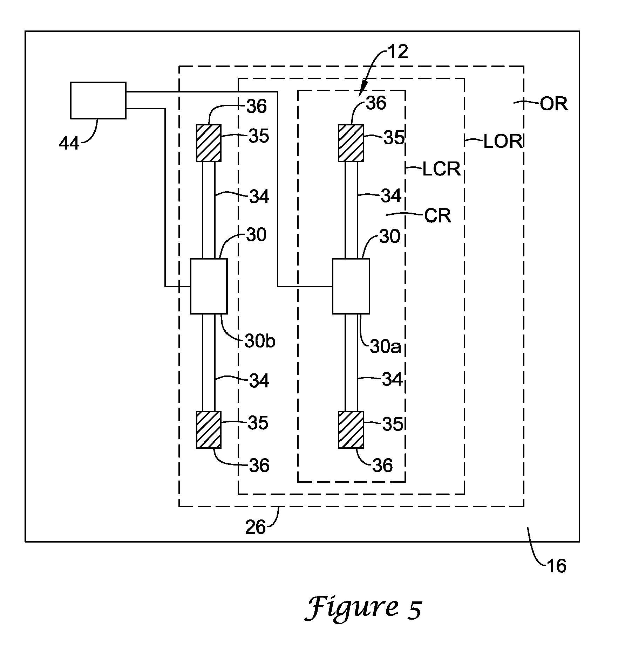

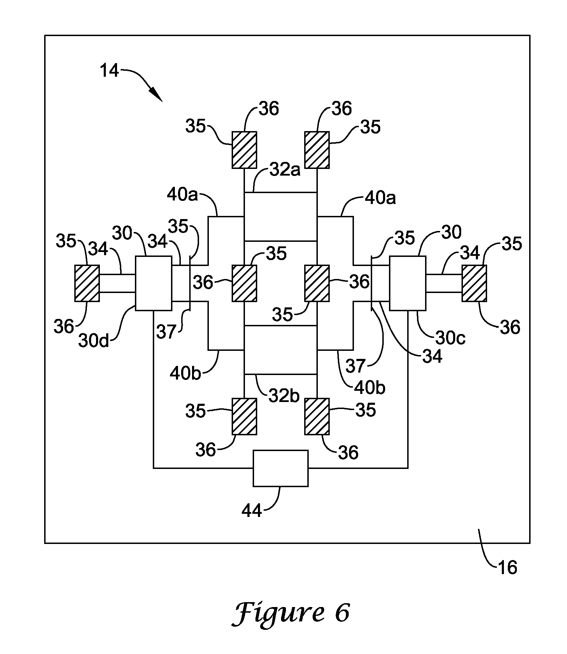

Illustratively, the pressure sensor 12, which may optionally form one or more of the sensors of the combo sensor apparatus 10, may comprise the first resonator 30a and the second resonator 30b, where the first resonator 30a and the second resonator 30b are supported on the sense diaphragm 26, as shown in Figures 1, 4 and 5. In some instances, the first resonator 30a may be supported by the sense diaphragm 26 such that it is positioned within a center region (CR) of the sense diaphragm 26, as shown in Figures 4 and 5 and outlined with a dotted line labeled LCR, and/or adjacent a center of the sense diaphragm 26. In some instances, the second resonator 30b may be supported by the sense diaphragm 26 such that it is positioned within an outer region (OR) of the sense diaphragm 26, as shown in Figures 4 and 6 as the space between the outer edge of the sense diaphragm 26 and a dotted line labeled LOR, and/or adjacent an edge of the sense diaphragm 26.

In some instances, the first resonator 30a and the second resonator 30b may be supported by the sense diaphragm 26 such that each of the first resonator 30a and the second resonator 30b may be exposed to or affected by substantially only one of a tensile stress and a compressive stress of the sense diaphragm when an external pressure is applied to the sense diaphragm 26. For example, the first resonator 30a position adjacent a center of the sense diaphragm 26 may be exposed to a tensile stress of the sense diaphragm 26, and the second resonator 30b adjacent an edge of the sense diaphragm 26 may be exposed to a compressive stress of the sense diaphragm 26. Exposing the first resonator 30a to an increasing tensile stress of the sense diaphragm 26 when a pressure is applied thereto may result in increasing a mechanical resonance frequency of the vibrating gate 42 (e.g., a first vibrating gate) of a MOSFET transistor 31a of the first resonator 30a. As a result of the increase in the resonance frequency of the vibrating gate 42 of the first MOSFET transistor 31a of the first resonator 30a, the frequency of the drain current of the first vibrating gate MOSFET transistor 31a may increase in the presence of pressure applied to the diaphragm 26 of the sensor apparatus 10. Exposing the second resonator 30b to a compressive stress of the sense diaphragm 26 when a pressure is applied thereto may result in the decrease of a resonance frequency of a vibrating gate 42 (e.g., a second vibrating gate) of the second MOSFET transistor 31b of the second resonator 30b. As a result of the decrease in the resonance frequency of the vibrating gate 42, a decrease of the frequency of the drain current of the second vibrating gate MOSFET transistor 31b of the second resonator 30b is obtained in the presence of the pressure applied to the diaphragm 26 of the sensor apparatus.

The first resonator 30a may include the first vibrating gate MOSFET transistor 31a having a source 46 and a drain 48, where the transistor action of the first vibrating gate MOSFET transistor 31a may be configured in at least a substantially vertical position such that the source 46 and the drain 48 may be configured substantially perpendicular to the chip substrate 24 on which the first vibrating gate MOSFET transistor 31a may be supported and/or positioned. In addition, the first resonator 30a may include one or more suspended vibrating beams 34 secured to and/or supported by anchors 35 (e.g., fix anchors 36) located on the pressure sensor diaphragm 26. In some instances, the suspended vibrating beams 34, shown in Figures 2A and 2B, may be electrostatically actuated or actuated in any other manner, as desired. In some cases, the suspended vibrating beams 34 may be actuated such that it vibrates in a plane substantially parallel to the substrate or wafer 24, where the vibrating beam 34 may vibrate at a resonance frequency that may be dependent on a tensile stress in and/or of the sense diaphragm 26. The vibrating beam 34 of the first resonator 30a may be configured to be substantially conductive and may have one or more side walls 52 that may extend substantially perpendicular to the chip substrate 24. Further, the perpendicularly extending side walls 52 of the suspended vibrating beam 34 may be configured to move across a dielectric gap 33 and towards and away from the gate oxide of the first vibrating gate MOSFET transistor 31a and may act as a gate 42 for the first vibrating gate MOSFET transistor 31a.

The second resonator 30b may include the second vibrating gate MOSFET transistor 31b with a source 46 and a drain 48, where the channel region 22 of the second vibrating gate MOSFET transistor 31b may be configured in at least a substantially vertical position such that the source 46 and the drain 48 may be configured substantially perpendicular to the chip substrate 24 on which the second transistor body 31b may be supported and/or positioned. In addition, the second resonator 30b may include one or more vibrating beams 34 secured to and/or supported by the pressure sense diaphragm 26 through anchors 35 (e.g., fix anchors 36). In some instances, the vibrating beams 34 may be electrostatically actuated or actuated in any other manner, as desired. In some cases, the suspended vibrating beams 34 may be actuated such that it vibrates in a plane substantially parallel to the chip substrate 24, where the suspended vibrating beams 34 may vibrate at a resonance frequency that may be dependent on a compressive stress in and/or of the sense diaphragm 26. The suspended vibrating beams 34 of the second resonator 30b associated with the second vibrating gate MOSFET transistor 31b may be configured to be substantially conductive and may have one or more side walls 52 that extend substantially perpendicular to the substrate or wafer 24. Further, the perpendicularly extending side walls 52 of the vibrating beam 34 may move across the dielectric gap 33 and towards and away from the gate oxide 21 of the second vibrating gate MOSFET transistor 21b and may act as a gate 42 for the second vibrating gate MOSFET transistor 31b.

Illustratively, the gyro sensor 14, which may optionally form a sensor of the combo sensor apparatus 10, may include the third resonator 30c, the fourth resonator 30d, the first proof or inertial vibrating mass 32a, the second proof or inertial vibrating mass 32b, the first lever arm 40a, and the second lever arm 40b, where these elements supported by the silicon substrate 24a and may be laterally spaced from the diaphragm 26. Where the first lever arm 40a may interconnect the first proof or inertial vibrating mass 32a to the third resonator 30c and the fourth resonator 30d and the second lever arm 40b may interconnect the second proof or inertial vibrating mass 32b to the third resonator 30c and the fourth resonator 30d, the first proof or inertial vibrating mass 32a and second proof or inertial vibrating mass 32b may be suspended above the first layer or silicon substrate 24a. In some cases, suspended beams 34 of the third resonator 30c and the fourth resonator 30d may connect to a fixed anchor 36 at a first end a mobile anchor 37 at a second end, where the mobile anchors 37 may attach to the first lever arm 40a and the second lever arm 40b, as shown in Figures 1, 4, and 6. The first lever arm 40a may be configured to extend between the third resistor 30c and the first suspended proof or inertial vibrating mass 32a and the fourth resonator 30d and the first proof or inertial vibrating mass 32a. The second lever arm 40b may be configured to extend between the third resonator 30c and the second suspended proof or inertial vibrating mass 32b and the fourth resonator 30d.

In some instances, the first proof or inertial vibrating mass 32a may be suspended between the third resonator 30c and the fourth resonator 30d, as shown in Figure 1, 4 and 6. The suspended first proof or inertial vibrating mass 32a and the suspended second proof or inertial vibrating mass 32b may be configured to vibrate along y axis in anti-phase (e.g., where the phase difference of the first proof or inertial vibrating mass 32a and the second proof or inertial vibrating mass 32b differs by approximately 180 degrees or pi radians) above the substrate between the third resonator 30c and the fourth resonator 30d. Where a rotation around a z-axis (z-axis is perpendicular to the x-y plan of the chip substrate 24, as shown, for example, by the coordinates in Figure 1) is applied to the chip 16 on which the gyro sensor 14 is positioned, the first proof or inertial vibrating mass 32a and the second proof or inertial vibrating mass 32b which are actuated to move back and forth in anti-phase along the y-axis, will be exposed to a Coriolis force acting on the x direction such that the third resonator 30c may be exposed to one of a tensile stress and a compressive stress and the fourth resonator 30d may be exposed to the other of the tensile stress and the compressive stress. Further, in some cases, the first proof or inertial vibrating mass 32a and the second proof or inertial vibrating mass 32b may be electrostatically actuated, or actuated in another manner, so that they are vibrating back and forth along y axis.

The third resonator 30c and the fourth resonator 30d may be supported by chip substrate 24a and spaced laterally from the sense diaphragm 26 such that each of the third resonator 30c and the fourth resonator 30d may be exposed to or affected by substantially only one of a tensile stress and a compressive stress generated by the Coriolis force oriented either towards x+ or x-depending on a sign of a rotation rate or rotation force of the sensor apparatus 10. The tensile stress and/or the compressive stress may be caused by a Coriolis force acting in the x-direction, or in other words may result, for example, from the combined effect of movement of one or more of the first proof or inertial vibrating mass 32a and the second proof or inertial vibrating mass 32b along the y-direction and the rotation rate of the sensor around z-direction.

In some instances, the third resonator 30c may be exposed to one of a compressive stress and a tensile stress of the substrate 24a depending on a sign of the rotation rate, and the fourth resonator 30d is exposed to the one of the compression stress and the tensile stress of the substrate 24a to which the third resonator 30c is not exposed. For example, when the substrate sensor or apparatus 10 is rotating at a first rotation rate, the third resonator 30c, due to Coriolis effect, may be exposed to a tensile stress of the chip substrate 24 and may have an increasing spring constant and increasing resonance frequency and the fourth resonator 30d may be exposed to a compressive stress of the substrate or wafer 24 and may have a decreasing spring constant and resonance frequency. In the example, when the chip substrate 24 is rotating at a second rotation rate having a different sign than the first rotation rate (e.g., the first rotation rate has a positive sign or is rotating in a positive direction about an axis and the second rotation rate has a negative sign or is rotating in a negative direction about an axis), the third resonator 30c may be exposed to a compressive stress of the chip substrate 24 and may have a decreasing spring constant and resonance frequency and the fourth resonator 30d may be exposed to a tensile stress of the substrate or wafer 24 and may have an increasing spring constant and resonance frequency.

Thus, a mechanical resonance frequency of a vibrating gate 42 (e.g., a third vibrating gate) of the third vibrating gate MOSFET transistor 31c associated with the third resonator 30c may be increasing or decreasing and thus the electrical frequency of the drain current of the third vibrating gate MOSFET transistor 31c may be increasing or decreasing depending on the sign of the rotation rate of the sensor or apparatus or any portion thereof. Similarly, a frequency of a drain current of a fourth vibrating gate MOSFET transistor 31d of the fourth resonator 30d may be increasing or decreasing and may be opposite with respect to the frequency variation of the drain current of the third vibrating gate MOSFET transistor 31c of resonator 30c.

The third resonator 30c positioned on and/or supported by a chip substrate 24 may include the third vibrating gate MOSFET transistor 31c having a source 46 and a drain 48, where the transistor action of the third vibrating gate MOSFET transistor 31c may be configured in at least a substantially vertical position such that the source 46 and the drain 48 may be configured substantially perpendicular to the chip substrate 24 on which the third transistor 31c may be supported and/or positioned. In addition, the third resonator 30c may include one or more vibrating beams 34 secured to and/or supported by the chip substrate 24. In some instances, the vibrating beams 34 may be electrostatically actuated or actuated in any other manner, as desired. Further, the suspended vibrating beam 34 may be actuated such that it vibrates in a plane substantially parallel to the chip substrate 24, where the vibrating beam 34 may vibrate at a resonance frequency that may be dependent on a rotational rate applied to the substrate or wafer 24. The suspended vibrating beam 34 of the third resonator 30c may be configured to be substantially conductive and may have one or more side walls 52 that may extend substantially perpendicular to the chip substrate 24. Further, the perpendicularly extending side walls 52 of the suspended vibrating beam 34 may be configured to move across the dielectric gap 33 (e.g., a vacuum gap) and towards and away from the gate oxide 21 of the third MOSFET transistor 31c c and may act as a vibrating gate 42 for the third MOSFET transistor 31c.

The fourth resonator 30d positioned on and/or supported by a chip substrate 24 may include the fourth vibrating gate MOSFET transistor 31d having a source 46 and a drain 48, where the transistor action of the fourth vibrating gate MOSFET transistor 31d may be configured in at least a substantially vertical position such that the source 46 and the drain 48 may be configured substantially perpendicular to the chip substrate 24 on which the fourth vibrating gate MOSFET transistor 31d may be supported and/or positioned. In addition, the fourth resonator 30d may include one or more suspended vibrating beams 34 secured to and/or supported by anchors 35 (e.g., fixed anchors 36 or mobile anchors 37) located on the chip substrate 24. In some instances, the suspended vibrating beams 34 may be electrostatically actuated or actuated in any other manner, as desired. Further, the vibrating beam 34 may be actuated such that it vibrates in a plane substantially parallel to the substrate or wafer 24, where the vibrating beam 34 may vibrate at a resonance frequency that may be dependent on a rotational rate applied to the substrate or wafer 24. The suspended vibrating beam 34 of the fourth resistor 30d may be configured to be substantially conductive and may have one or more side walls 52 that extend substantially perpendicular to the substrate or wafer 24. Further, the perpendicularly extending side walls 52 of the suspended vibrating beams 34 may move across the dielectric gap 33 (e.g., a vacuum gap) and towards and away from the gate oxide 21 of the fourth MOSFET transistor 31d and may act as a gate 42 for the fourth vibrating gate MOSFET transistor 31d.

In some instances, the sensor or apparatus 10 may include one or more detectors or demodulators 44 configured to communicate and/or be in communication with one or more of the first resonator 30a, the second resonator 30b, the third resonator 30c, and the fourth resonator 30d, as depicted in Figures 2A and 2B. The one or more demodulators 44 may be in communication with the resonators 30 such that one or more load resistances from output circuits of one or more of the vibrating gate MOSFET transistors 31 associated with one or more of the first resonator 30a, the second resonator 30b, the third resonator 30c, and the fourth resonator 30d are configured to convert a frequency modulated drain current of the corresponding vibrating gate MOSFET transistor 31 to one or more frequency modulated voltages, which may then be an input signal for the demodulator 44 . For example, at the output of each of the demodulator(s) corresponding to the first resonator 30a and the second resonator 30b, the outputted frequency modulated voltages from the first resonator 30a and the second resonator 30b generate a voltage that is related to the frequency difference of the first resonator 30a and the second resonator 30b and thus, related to the pressure applied to the apparatus. Similarly, for example, the output of the demodulator(s) corresponding to the third resonator 30c and the fourth resonator 30d generate a voltage that may be related to the rotation rate applied to the sensor or apparatus 10.

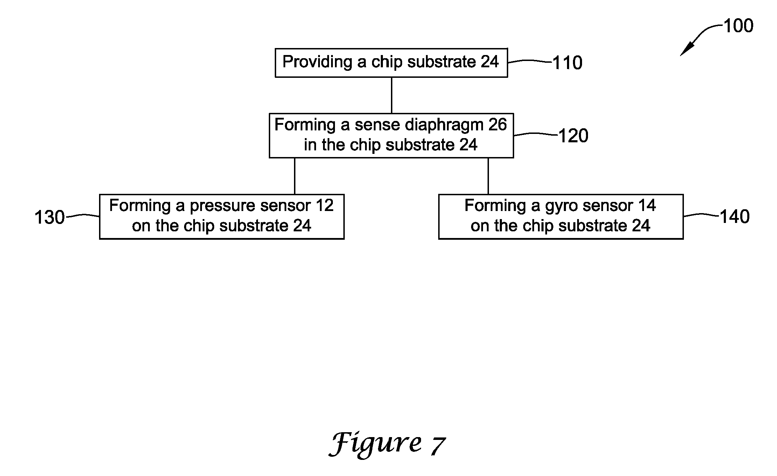

Illustratively, a method 100 of fabrication of a multitude of the sensors or apparatus 10 (e.g., a SOI-CMOSFET MEMS/NEMS fabrication) may include providing 110 one or more chip substrates 24 from a wafer (e.g., a SOI wafer), forming 120 a sense diaphragm in each of the one or more chip substrates 24, forming 130 a pressure sensor 12 (e.g., a differential resonant pressure sensor containing vibrating gate MOSFET transistors) on each chip substrate 24, and forming 140 a gyro sensor 14 (e.g., a differential resonant gyro sensor containing vibrating gate MOSFET transistors) on each chip substrate 24, as shown in Figure 7. In some cases, the wafer may include a SOI wafer, where each SOI wafer may have a plurality of chip substrates 24 for forming chips 16. Each chip substrate 24 may have a silicon substrate 24a, a buried oxide layer 24b on the silicon substrate 24a, and a silicon single crystal layer 24c on the buried oxide layer 24b. The design of the wafer is not limited to the example disclosed, but rather, the design may include any desired number of layers, the layer(s) may be any desired material, and the layer(s) may be in any desired order. Where the wafer is a SOI wafer, the sense diaphragm 26 of each chip 16 of the SOI wafer may be formed by etching away, or through one or more other forming techniques, at least a part of the silicon substrate 24a of each chip substrate 24, while leaving at least some of the silicon substrate 24a, the buried oxide layer 24b and the silicon single crystal layer 24c. The formed pressure sensor 12 may be a vibrating gate SOI-CMOSFET differential resonant pressure sensor 12 that may be supported by and/or positioned on the sense diaphragm 26. The formed gyro sensor 14 may be a vibrating gate SOI-CMOSFET differential gyro sensor 14 that may be supported by each chip 16 having chip substrate 24 and/or positioned on the SOI chip substrate 24 laterally adjacent to the sense diaphragm 26. Optionally, the SOI-CMOSFET MEMS/NEMS fabrication may be packaged in a housing, where the housing may substantially enclose the chip substrate 24, while leaving access for the sense diaphragm 26 to receive an external pressure applied to chip 16. In some cases, the housing may create vacuum and may be hermetically sealed.

Illustratively, forming the pressure sensor (e.g., the vibrating gate SOI-MOSFET differential resonant pressure sensor) 12 on the sense diaphragm 26 may include doping 132 (e.g. n type arsenic doping) at least a part of the single crystal layer 24c above the sense diaphragm 26, removing at least part of the single crystal layer 24c above the sense diaphragm 26, removing at least part of the buried oxide layer 24b adjacent (e.g., below) the removed part of the single crystal layer 24c, forming of the gate oxide 21 on a portion of the sidewall of the single crystal silicon layer 24c, and vacuum packaging the chip 16 such that a quality level may be maintained while an ambient pressure is accessing the back side of the pressure sensing diaphragm only. The doping of the single crystal layer 24c may include extending the doping through substantially the entire thickness of the epitaxial layer 24c. The removing of at least part of the single crystal layer 24c may be performed with an etching technique or other removal technique, where the removal of the single crystal layer 24c may result in a patterned layer 24c. In some instances, the removal of at least part of the buried oxide layer 24b of the chip substrate 24 may include the removal of at least part of the buried oxide layer 24b below a portion of the patterned single chip layer 24c. Forming the gate oxide 21 on the sidewall of the silicon single crystal layer 24c may be performed by thermal oxidation of silicon followed by removal of the silicon dioxide from the regions where it is not needed, or through any other forming technique, as desired. Vacuum packaging of the resonant differential pressure sensor chips 16 may be performed simultaneously for all chips 16 of an SOI wafer, by means of wafer level packaging technology, or through any other packaging technique.

Illustratively, forming 140 the gyro sensor (e.g., the vibrating gate SOI-CMOSFET differential resonant gyro sensor) 14 on the chip substrate (e.g., SOI chip substrate ) 24 and laterally spaced from the diaphragm 26 may include doping at least part of the silicon single crystal layer 24c (e.g. n type arsenic doping) adjacent to the sense diaphragm 26, removing at least part of the silicon single crystal layer 24c adjacent (e.g., spaced laterally from) to the sense diaphragm 26, removing at least a part of the buried oxide layer 24b of the chip substrate 24, forming of the gate oxide 21 on a portion of the sidewall of the single crystal silicon layer 24c, and vacuum packaging the chip 16 such that a quality level may be maintained while an ambient pressure is accessing the back side of the pressure sensing diaphragm only. The doping of the silicon single crystal layer 24c adjacent to the sense diaphragm 26 may include extending the doping through substantially the entire thickness of the epitaxial layer 24c. The removing of at least part of the silicon single crystal 24c may be performed with an etching technique or other removal technique, where the removal of the layer 24c may result in a patterned silicon single crystal layer. In some instances, the removal of at least part of the buried oxide layer 24b of the wafer 24 may include the removal of at least part of the buried oxide 24b below a portion of the patterned single crystal layer 24c. Forming the gate oxide 21 on the sidewall of the silicon single layer 24c may be performed by thermal oxidation of silicon followed by removal of the silicon dioxide from the regions where it is not needed, or through any other forming technique, as desired. Vacuum packaging 139 of the resonant differential pressure sensor chips 16 may be performed simultaneously for all chips 16 of an SOI wafer, by means of wafer level packaging technology, or through any other packaging technique.

Optionally, the SOI-CMOSFET MEMS/NEMS fabrication may be packaged in a housing, where the housing may substantially enclose the chip 16, while leaving access for the sense diaphragm 26 to receive an external pressure applied to chip 16. In some cases, the housing may create vacuum and may be hermetically sealed about the circuitry supported by or on substrate or wafer 24. Optionally, the SOI-CMOSFET MEMS/NEMS fabrication may include one or more wire bonds, bond pads, or other electrical connection features fabricated on and/or in the substrate or wafer 24, as desired. For example, where there is a housing, the electrical connection features may be configured on the substrate or wafer 24 and interior the housing, exterior the housing, or interior and exterior the housing, as desired.

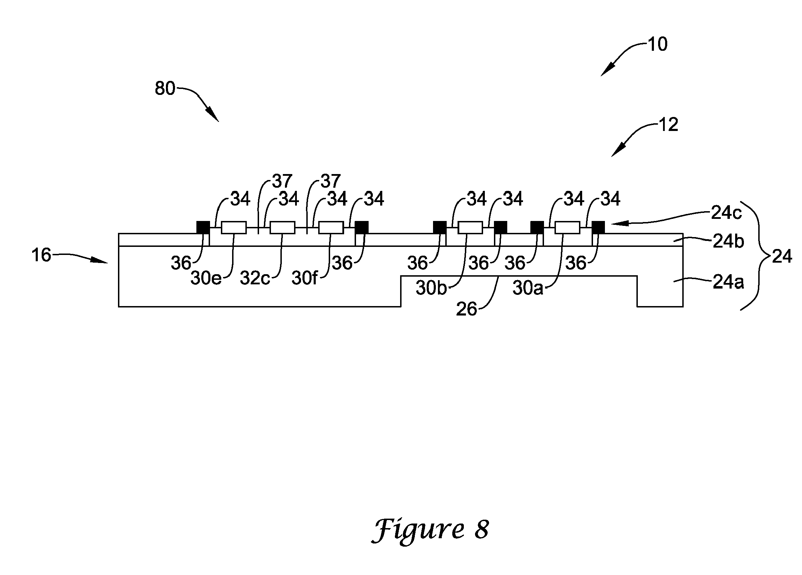

Figure 8 shows a cross-sectional side view of an illustrative differential resonant pressure sensor and differential acceleration sensor system 10 including the double ended tuning fork resonators containing vibrating gate MOSFET transistors illustrated in Figures 2A and 2B. In some cases, a single chip differential resonant pressure and acceleration sensor apparatus 10 may include two or more sensors 12, 80 formed on a single chip 16. The single chip 16 may include the substrate 24 having the sense diaphragm 26, the first resonator 30a and the second resonator 30b supported by the sense diaphragm 26 forming the pressure sensor 12 as discussed above and shown in Figures 1 and 4. A fifth resonator 30e and a sixth resonator 30f may be laterally spaced from the sense diaphragm 26 and supported by the substrate 24a. An inertial mass 32c may be mechanically coupled to the fifth resonator 30e and the sixth resonator 30f forming an acceleration sensor 80. Illustratively, the resonators 30a-30f, which may be at least partially formed by the single crystal silicon layer 24c (e.g. silicon single crystal layer of SOI wafer), may include one or more portions of the resonators 30a-30f suspend above the silicon substrate layer 24a and/or the anchors 36 and 37, as shown in Figure 3. In some instances, the suspended portion(s) of resonators 30a-30f may be at least partially formed by removing one or more portions of the single crystal layer 24c and oxide layer 24b, as further discussed above.

In some instances, MEMS and/or NEMS technology may be utilized to produce the combination sensor apparatus 10 configured to sense two or more similar measurands or dissimilar measurands (e.g., an applied pressure and an applied acceleration) in a variety of applications. For example, such a combination sensor apparatus 10 may be used in wireless applications; medical applications; athletic applications; aerospace applications, where atmospheric pressure may be easily converted to altitude; and other applications, as desired. Moreover, utilizing MEMS and/or NEMS technology may facilitate combining and/or interconnecting different sensors from one or more original equipment manufacturer ("OEM") vendors, at the package level, for one or more of a variety of applications (e.g., wireless and/or other compact applications).

Illustratively, the combo sensor apparatus 10 utilizing such MEMS/NEMS technology may be a combination of a pressure sensor 12 and an acceleration sensor 80 (e.g., accelerometer) on the same single chip 16, or a combination of one or more other sensors (gyro sensor 12, temperature sensor, humidity sensor, chemical sensor, etc.) on a single chip 16. Alternatively, or in addition, similar MEMS/NEMS technology be used to make individual sensors (e.g., a single pressure sensor 12 per chip 16, a single gyro sensor 14 per chip 16, a single acceleration sensor 80 per chip 16, etc.).

An operating principle of the illustrative differential resonant pressure sensor 12, differential resonant acceleration sensor 80 or combo differential resonant pressure sensor 12 and differential resonant acceleration sensor 80 of the apparatus 10 may include the ability of each sensor 12, 80 to detect one or more measurands that is/are capable of changing a mechanical stiffness of one or more vibrating elements 34 of the corresponding pressure sensor 12 and/or acceleration sensor 80 and thus, may have the ability to further affect a resonance frequency of that vibrating element 34. In some cases, the one or more measurands (e.g., a pressure applied to the sensor 10 and/or an acceleration 80 of the combo sensor apparatus 10) may be measured by detecting voltage through circuits configured to respond (e.g., change the frequency of an electric current and/or the frequency of an electric voltage) to an input pressure and/or acceleration applied to the combo sensor apparatus 10.

In some instances, the pressure sensor 12, the acceleration sensor 80 and/or the combo resonant pressure sensor and resonant acceleration sensor apparatus 10 may use a differential approach to pressure detection and/or acceleration detection to improve sensitivity and performance of the sensors 10, 12, 80 over typical sensors in the art. Such a differential approach may help cancel temperature variation effects, reduce long term drift due to material aging and thus improve sensitivity and performance of the sensors 12, 14, 80 over typical sensors in the art, and/or otherwise highly minimizing the common mode drift and/or noise. For example, in some cases, two or more resonators 30 may be used for detecting a pressure applied to the resonant combo sensor apparatus 10 and two or more resonators 30 may be used for detecting an acceleration applied to the same resonant combo sensor apparatus 10. The two resonators 30 that may be configured to detect the pressure applied to the combo sensor 10 may be used to differentially detect pressure applied to a chip substrate 24 on which the resonant pressure sensor 12 and the resonant acceleration sensor 80 may be supported and/or positioned and two resonators 30 may be used to differentially detect an acceleration applied to the chip substrate 24 on which the pressure sensor 12 and the acceleration sensor 80 may be supported and/or positioned (e.g., one resonator 30 may be configured to detect tensile stress of the chip substrate 24 and a corresponding different resonator 30 may be configured to detect compressive stress).

When an external pressure is applied, such as to the back side of sense diaphragm 26 of the pressure sensor 12 of the chip 16 (Fig.5), the resonator 30a is exposed to a tensile stress and the resonator 30b is exposed to the compressive stress of the sense diaphragm.

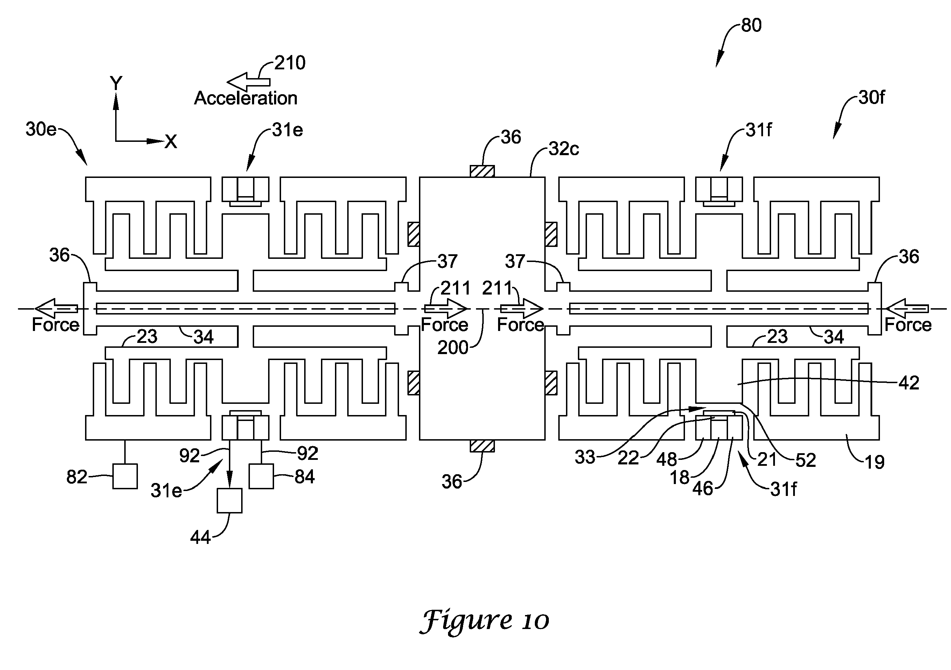

When an acceleration 210 oriented towards -x is applied to the acceleration sensor 80 (Fig. 10), containing the resonators 30f and 30e both connected to the inertial mass 32c, an inertial force 211 oriented towards +x will be developed in this inertial mass 32c, which will generate a compressive stress in the resonator 30f and a tensile stress in the resonator 30e.

When the pressure applied to the chip 16 and the acceleration of the chip 16 are differentially detected, a differential resonance frequency may be calculated between a respective resonator 30 exposed to tensile stress and a respective resonator 30 exposed to compressive stress of each of the pressure sensor 12 and the acceleration sensor 80, where in the absence of a pressure applied to the chip 16 and an acceleration applied to the chip 16, the resonance frequency of the four resonators may be substantially the same. Due to taking a differential resonance frequency between the resonator 30 exposed to tensile stress and the resonator 30 exposed to compressive stress, a sensitivity of the frequency may be substantially increased (e.g., substantially doubled) for each of the pressure sensor 12 and the acceleration sensor 14 when compared to acceleration sensors and/or pressure sensors that only measure changes in one of either the compressive stress or changes in the tensile stress. The added sensitivity is realized, at least in part, because the resonators 30 of the pressure sensor 12 and the resonators 30 of the acceleration sensor 80 are configured such that when the tensile stress increases and the resonance frequency of the resonator 30 measuring changes in tensile stress increases, the compressive stress increases and the resonance frequency of the resonator 30 measuring compressive stress decreases. Thus, by measuring differential changes in tensile stress and compressive stress, higher sensitivity of the sensor apparatus 10 may be achieved. Among other useful attributes, such differential resonant frequency calculations may be beneficial for canceling "common mode signals" coming from temperature, material ageing or technology variations in the illustrative combo sensor 10, reducing low frequency drift of the illustrative combo sensor 10 caused by aging materials and environmental conditions (e.g., temperature variations), providing general relatively high sensor accuracy, etc.

As discussed above, each resonator 30 may include a vibrating gate transistor 31 performed by different technology (e.g., MOSFET, SOI- CMOSFET, etc.) and may operate on the basis of frequency shift in the frequency of drain current of a vibrating gate MOSFET transistor as a function of an external measuarand to be detected using the corresponding vibrating gate MOSFET transistor 31. In some cases, the vibrating gate MOSFET transistor 31 1 may be used for the detection of changes in resonance frequency of one or more of the first resonator 30a, the second resonator 30b, the fifth resonator 30e, and the sixth resonator 30f. For example, when one or more of an external pressure and an acceleration is applied to a combo sensor apparatus 10 having a pressure sensor 12 and an acceleration sensor 80 on a chip 16, the vibrating gate MOSFET transistors 31 may be configured to facilitate the detection of changes in resonance frequency of one or more of the first resonator 30a, the second resonator 30b, the fifth resonator 30e, and the sixth resonator 30f, where the changes in resonance frequency may be proportional to the pressure applied to the combo sensor apparatus 10 and/or the acceleration of the combo sensor apparatus 10.

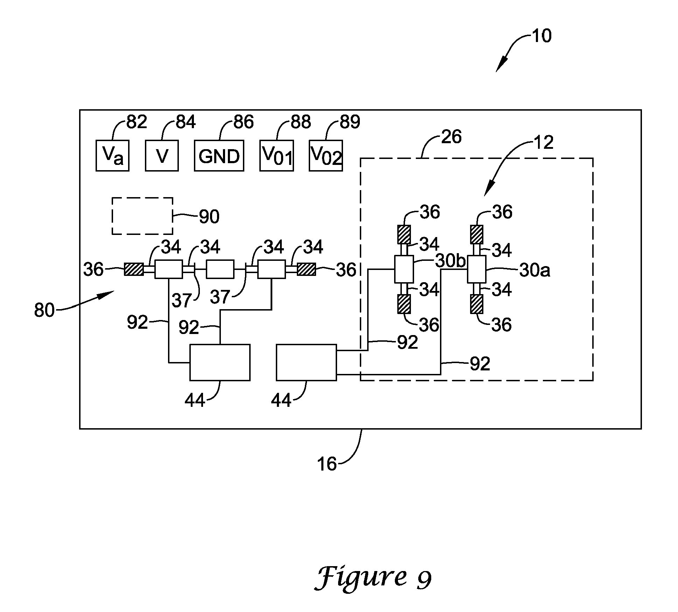

Figure 9 shows a schematic top view of an illustrative differential resonant pressure sensor and acceleration sensor system, such as the illustrative combination resonant pressure sensor and acceleration sensor system 10 of Figure 8. The combination differential resonant pressure sensor and acceleration sensor system 10 may include the pressure sensor 12 positioned above the sense diaphragm 26, and the acceleration sensor 80 laterally adjacent to the sense diaphragm. The combo sensor apparatus 10 may further include the one or more demodulators 44 communicatively coupled to the resonators 30a, 30b, 30e, and 30f via one or more electrical pathways 92. In some cases, the combo sensor apparatus 10 may include electrically conductive pads 82, 84, 86, 88, and 89 on the top surface of the sense die substrate 24 in an area laterally adjacent to the sense diaphragm 26 and the acceleration sensor 80. For example, the electrically conductive pads may include a power supply connection Va 82 for supplying an alternating voltage signal to the secured comb 19 for electrostatic actuation of the vibrating beam to their resonance. This alternating voltage Va 82 may have a specified magnitude at a specified electrical frequency. For example, the electrical frequency may be equal to the mechanical resonance frequency of the vibrating tines and its mobile components (e.g the vibrating beams 34, the vibrating combs 23) of the DETFs of the resonators 30a-30f of Figures 1, 4, 5, 6, and 8.

In some cases, a DC supply voltage connection V 84, such as for biasing the output electrical circuits of the vibrating gate MOSFET transistors included in the combo sensor apparatus 10, and/or a ground connection GND 86 may be provided. Such a ground GND 86 connection can be made for biasing the p-type region 18 at the GND potential. One or more pads V₀₁ 88 may be provided for outputting a voltage signal coming from demodulator 44, and which may be proportional to the frequency shift of the resonators 30a, 30b related to a pressure applied to the sense diaphragm 26. One or more pads V₀₂ 89 may be provided for outputting a voltage signal coming from a demodulator 44, and which may be proportional to the frequency shift of the resonators 30e and 30f related to the acceleration applied to the sensor 80 of the combo sensor apparatus 10. In some cases, an electrically conductive pad may be provided to output a voltage signal coming from a demodulator 44, and which may be proportional to the frequency shift of the resonators 30c and 30d related to the rotation rate applied to the gyro sensor 14. In some cases, a circuit area 90 may include one or more one or more electrical components for signal conditioning of an output signal. For example, output circuits may be electrically connected to the vibrating gate MOSFET transistors for converting the frequency modulated drain currents into a frequency modulated voltages by means of load resistances. These frequency modulated voltages may then be applied to the demodulators 44, to provide the output voltages (e.g., the voltages V₀₁, V₀₂, etc.). The chip 16 may include electrical traces 92 on the surface of the chip 16 or within the substrate 24 that provide electrical connections between the various electrically conductive pads 82, 84, 86, 88, and 89, the one or more resonators 30a-30f, and/or the one or more components in the circuit area 90. In one example, traces may be used to form electrical connections between the conductive pads 82, 84, 86, 88, and 89, the sensors 12, 14, and/or 80, the one or more demodulators 44 and the one or more electrical components in the circuit area 90. In some cases, the traces may be incorporated into the substrate (e.g., p-type doping on an n-type substrate, or an n-type doping of a p-type substrate) and/or may include metal leads on the surface of the substrate, or any suitable material may be used, such as conductive polymers.

Figure 10 shows a schematic top view of the illustrative resonant acceleration sensor 80 of Figures 8 and 9. Illustratively, the acceleration sensor 80, which may optionally form a sensor of the combo sensor apparatus 10, may comprise the fifth resonator 30e and the sixth resonator 30e as shown in Figures 2A and 2B, and a third inertial mass 32c. These elements may be at least partially formed by the single crystal silicon layer 24c and supported by the silicon substrate 24a and may be laterally spaced from the diaphragm 26. The third inertial mass 32c is made of the single crystal layer 24c and may be suspended above the first layer or silicon substrate 24a. In some cases, suspended beams 34 of the fifth resonator 30e, the sixth resonator 30e may connect to a fixed anchor 36 at a first end and a mobile anchor 37 at a second end, where the mobile anchors 37 may attach to the third inertial mass 32c shown in Figures 8, 9, and 10. Additionally, the third inertial mass 32c may be affixed to the silicon substrate 24a using one or more fixed anchors 36.

The fifth resonator 30e and the sixth resonator 30f may be supported by substrate 24a and spaced laterally from the sense diaphragm 26 such that each of the fifth resonator 30e and the sixth resonator 30f may be exposed to or affected by substantially only one of a tensile stress and a compressive stress of the sense diaphragm depending on a sign of an applied acceleration of the sensor apparatus 10. The tensile stress and/or the compressive stress may be caused by or may result from movement of the third inertial mass 32cd in response to the acceleration of the sensor. For example, the acceleration sensor 80 may be configured to sense an acceleration applied to the sense apparatus 10 of Figures 8 and 9 along a specified axis AB 200 of a first sign, acceleration 210 or the opposite sign acceleration. For example, when the acceleration 210 is applied to the sensor apparatus 10 along the axis AB 200, the fifth resonator 30e experiences a tensile stress and the sixth resonator 30f experiences a compressive stress. Conversely, when the acceleration has an opposite sign and is applied to the sensor apparatus along the axis AB 200, the fifth resonator 30e experiences a compressive stress and the sixth resonator 30f experiences a tensile stress.

The fifth resonator 30e positioned on and/or supported by a chip substrate 24 may include the fifth vibrating gate MOSFET transistor 31e having a n-type source 46, a n-type drain 48, and a p-type region 18 containing the field effect induced channel region located between source and drain, where the fifth vibrating MOSFET transistor 31e may be configured in at least a substantially vertical position such that the source 46, the drain 48 and the region 18 in between source and drain may be configured substantially perpendicular to the substrate or wafer 24 on which the fifth vibrating gate MOSFET transistor 31e may be supported and/or positioned. In addition, the third resonator 30c may include one or more vibrating beams 34 secured to and/or supported by the substrate or wafer 24. In some instances, the vibrating beams 34 may be electrostatically actuated or actuated in any other manner, as desired. Further, the vibrating beam 34 may be actuated such that it vibrates in a plane substantially parallel to the chip substrate 24, where the vibrating beam 34 may vibrate at a resonance frequency that may be dependent on a rotational rate applied to the substrate or wafer 24. The vibrating beam 34 of the fifth resonator 30e may be configured to be substantially conductive and may have one or more side walls 52 that may extend substantially perpendicular to the chip substrate 24. Further, the perpendicularly extending side walls 52 of the vibrating beam 34 may be configured to move towards and away from the fifth vibrating gate MOSFET transistor 31e and may act as a gate 42 for the fifth vibrating gate MOSFET transistor 31e.

The sixth resonator 30f positioned on and/or supported by a chip substrate 24 may include the sixth vibrating gate MOSFET transistor 31f having a source 46, a drain 48, and a region in between them of opposite doping 18 in which the conduction channel may be induced, and where the sixth vibrating gate MOSFET transistor 31f may be configured in at least a substantially vertical position such that the source 46, the drain 48 and the region 18 may be configured substantially perpendicular to the chip substrate 24 on which the sixth vibrating gate MOSFET transistor 31f may be supported and/or positioned. In addition, the sixth resonator 30f may include one or more vibrating beams 34 secured to and/or supported by the chip substrate 24. In some instances, the vibrating beams 34 may be electrostatically actuated or actuated in any other manner, as desired. Further, the vibrating beam 34 may be actuated such that it vibrates in a plane substantially parallel to the substrate or wafer 24, where the vibrating beam 34 may vibrate at a resonance frequency that may be dependent on a rotational rate applied to the chip substrate 24. The vibrating beam 34 of the sixth resonator 30f may be configured to be substantially conductive and may have one or more side walls 52 that extend substantially perpendicular to the substrate or wafer 24. Further, the perpendicularly extending side walls 52 of the vibrating beam 34 may move towards and away from the gate oxide layer 21 of the sixth vibrating gate MOSFET transistor 31f and may act as a gate 42 for the sixth transistor body 31f.

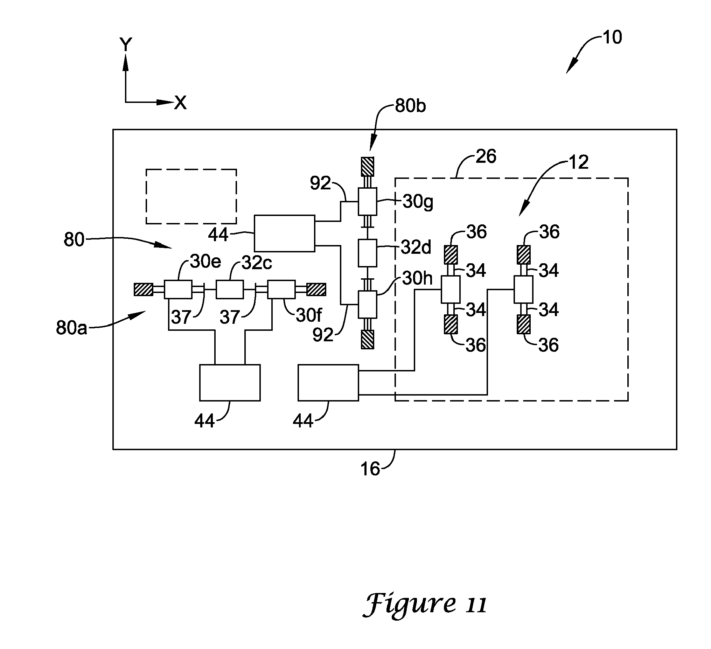

Figure 11 shows a schematic top view of an illustrative resonant pressure sensor and acceleration sensor system 10 including two or more acceleration sensors 80a, 80b. In some cases, the sensor apparatus 10 may include the pressure sensor 12, such as the pressure sensor 12 discussed above with Figures 1, 4, 5, 8, and 9, located on the sense diaphragm 26. In some cases, two or more acceleration sensors 80a, 80b may be positioned laterally adjacent to the sense diaphragm 26. For example, the acceleration sensor 80a may be positioned to sense an acceleration that is applied to the sensor body 10 along the x-axis and the acceleration sensor 80b may be positioned to sense an acceleration that is applied along the y-axis. The pressure sensor 12 and each of the acceleration sensors 80a, 80b may be electrically coupled via one or more electrical pathways 92 to one or more demodulators 44 such that one or more load resistances from output circuits of one or more of the vibrating gates 42 of the MOSFETs associated with one or more of the first resonator 30a, the second resonator 30b, the fifth resonator 30e, the sixth resonator 30f, a seventh resonator 30g, and an eighth resonator 30h are configured to convert a drain current of the corresponding vibrating gate 42 of the MOSFET to one or more frequency modulated voltages.

In some cases, the circuit area 90 may include one or more one or more electrical components (e.g., the demodulators 44, an amplifier, a processor, a voltage divider, etc.) for signal conditioning and processing of an output signal (e.g., V₀₁, V₀₂, etc.) and/or the electrically conductive pads 82, 84, 86, 88, and 89. In some cases, an electrical circuit may be provided in the circuit area 90 for computing an electrical signal proportional to an acceleration vector in the x-y plane at the surface of the sensor body using the signals provided by the acceleration sensors 80a and 80b. In other cases, each sensor 12, 80a, 80b may each provide an individual output signal to an electrically conductive pad for communication to an electrical circuit separate from the sensor apparatus 10.

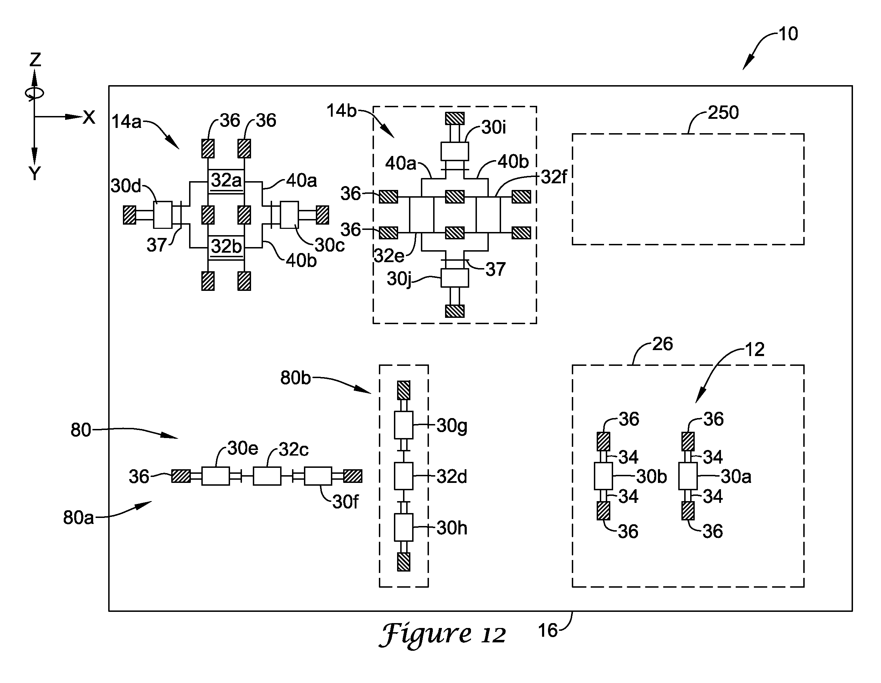

Figure 12 shows a schematic top view of an illustrative combination differential resonant pressure sensor, resonant gyro sensor and acceleration sensor system 10. In some cases, the combination sensor apparatus 10 may include a pressure sensor 12 located above the sense diaphragm 26, one or more of the acceleration sensors 80a, 80b disposed laterally from the sense diaphragm 26, and one or more gyro sensors 14a, 14b disposed laterally from the sense diaphragm 26. In some cases, the sensor apparatus 10 may include a circuit area 250 (similar to circuit area 90 of Figure 9), disposed laterally from the sense diaphragm 26, the one or more acceleration sensors 80a, 80b, and one or more gyro sensors 14a, 14b. In some cases, the sensor apparatus 10 may include a pressure sensor 10 and two gyro sensors 14a, 14b. In some cases, the circuit area 250 may include the one or more demodulators associated with each of the sensors 12, 14, 80a, 80b. In other cases, the demodulators 44 may be located adjacent to the respective sensors 12, 14, 80a, 80b outside of the circuit area 250.

As discussed above with Figure 6, the second gyro sensor 14b may include a ninth resonator 30i, a tenth resonator 30j, a fifth proof or inertial vibrating mass 32e and a sixth proof or inertial vibrating mass 32f. In some instances, the fifth proof or inertial vibrating mass 32e may be suspended between the ninth resonator 30i and the tenth resonator 30j, as shown in Figures 1, 4, 6, and 12. The suspended ninth proof or inertial vibrating mass 32i and the suspended fifth proof or inertial vibrating mass 32e may be configured to vibrate along the x axis in anti-phase (e.g., where the phase difference of the fifth proof or inertial vibrating mass 32i and the sixth proof or inertial vibrating mass 32f differs by approximately 180 degrees or pi radians) above the substrate between the ninth resonator 30i and the fourth resonator 30j. Where a rotation around a z-axis (z-axis is perpendicular to the x-y plan of the chip substrate 24, as shown, for example, by the coordinates in Figure 1) is applied to the chip 16 on which the second gyro sensor 14b is positioned, the fifth proof or inertial vibrating mass 32e and the sixth proof or inertial vibrating mass 32f which are actuated to move back and forth in anti-phase along the x-axis, will be exposed to a Coriolis force acting on the y direction such that the ninth resonator 30i may be exposed to one of a tensile stress and a compressive stress and the tenth resonator 30j may be exposed to the other of the tensile stress and the compressive stress. Further, in some cases, the fifth proof or inertial vibrating mass 32e and the sixth proof or inertial vibrating mass 32f may be electrostatically actuated, or actuated in another manner, so that they are vibrating back and forth along the x axis.

The ninth resonator 30i and the tenth resonator 30j may be supported by chip substrate 24a and spaced laterally from the sense diaphragm 26 such that each of the ninth resonator 30i and the tenth resonator 30j may be exposed to or affected by substantially only one of a tensile stress and a compressive stress generated by the Coriolis force oriented either towards y+ or y-depending on a sign of a rotation rate of the sensor apparatus 10. The tensile stress and/or the compressive stress may be caused by a Coriolis force acting in the y-direction, or in other words may result, for example, from the combined effect of movement of one or more of the fifth proof or inertial vibrating mass 32e and the sixth proof or inertial vibrating mass 32f along the x-direction and the rotation rate of the sensor around z-direction.

In some instances, the ninth resonator 30i may be exposed to one of a compressive stress and a tensile stress of the anchors 36 connected to the substrate 24a depending on a sign of the rotation rate, and the tenth resonator 30j is exposed to the one of the compression stress and the tensile stress of the anchors 36 connected to the substrate 24a to which the ninth resonator 30i is not exposed. For example, when the substrate sensor or apparatus 10 is rotating at a first rotation rate, the ninth resonator 30i, due to Coriolis effect, may be exposed to a tensile stress of the anchors 36 connected the chip substrate 24 and may have an increasing spring constant and increasing resonance frequency and the tenth resonator 30j may be exposed to a compressive stress and may have a decreasing spring constant and resonance frequency. In the example, when the chip substrate 24 is rotating at a second rotation rate having a different sign than the first rotation rate (e.g., the first rotation rate has a positive sign or is rotating in a positive direction about an axis and the second rotation rate has a negative sign or is rotating in a negative direction about an axis), the ninth resonator 30i may be exposed to a compressive stress of the anchors 36 connected to the chip substrate 24 and may have a decreasing spring constant and resonance frequency and the tenth resonator 30j may be exposed to a tensile stress and may have an increasing spring constant and resonance frequency.

Thus, a mechanical resonance frequency of a vibrating gate 42 (e.g., a ninth vibrating gate) of the ninth vibrating gate MOSFET transistor 31i associated with the ninth resonator 30i may be increasing or decreasing and thus the electrical frequency of the drain current of the ninth vibrating gate MOSFET transistor 31i may be increasing or decreasing depending on the sign of the rotation rate of the sensor or apparatus or any portion thereof. Similarly, a frequency of a drain current of a tenth vibrating gate MOSFET transistor 31j of the tenth resonator 30j may be increasing or decreasing and may be opposite with respect to the frequency variation of the drain current of the ninth vibrating gate MOSFET transistor 31i of resonator 30i.

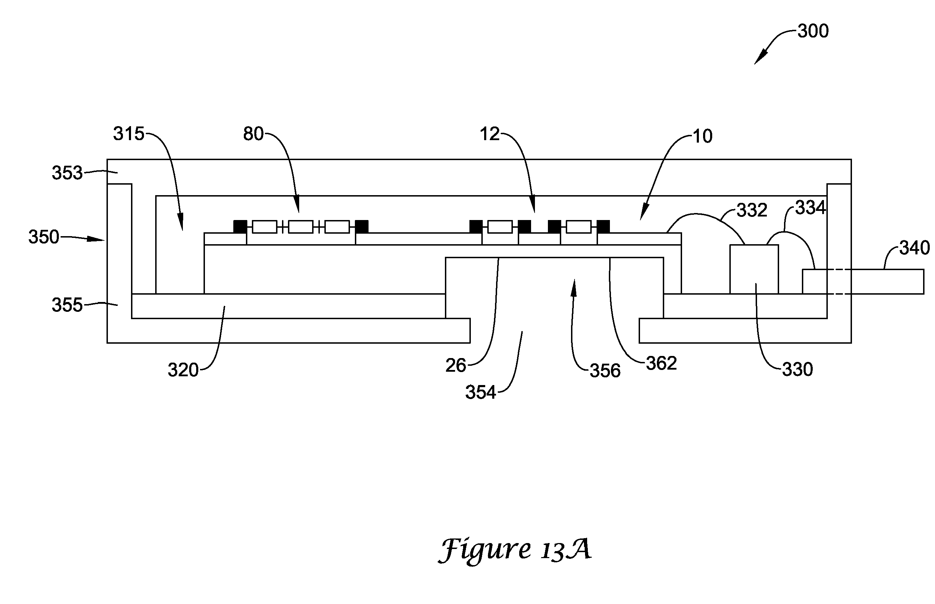

Figure 13A shows a cross-sectional side view of an illustrative combination acceleration and pressure sensor 300 including the illustrative sense die of Figures 1, 4, 5, 6, 8, 9, 11, and 12. In some cases, the combination sensor 300 may include a sensor apparatus 10 affixed to a substrate 320. In some cases, the substrate 320 may form a seal between the sensor apparatus 10 and a housing 350. For example, a cavity 315 may be formed such that the cavity 315 encloses an area under negative pressure, such as a vacuum. The sensor apparatus may include the pressure sensor 12 positioned over the sense diaphragm 26, and an acceleration sensor 80 positioned laterally adjacent to the sense diaphragm 26. In some cases, the sensor apparatus 10 may further include a gyro sensor 12 (not shown) positioned laterally from the sense diaphragm 26 and the one or more acceleration sensors 80 (e.g., acceleration sensor 80a and 80b). The sensor apparatus 10 may be located within the cavity 315 of a housing 350. In one example the cavity 315 may also include one or more other electrical circuits 330. The electrical circuits 330 may be configured to, for example, condition an output signal from the sensor apparatus 10. In another example, the electrical circuits 330 may include components for creating one or more voltages (e.g., V, Vg, etc.) discussed above. In some cases, electrical elements on the sensor apparatus 10 may be connected to the one or more electrical circuits 330 via an electrical connection 332 (e.g., wire bonds).

In one example, the housing 350 may include a base 355 and a cover 353 and one or more electrical contacts 340 capable of providing an electrical connection from a circuit external to the sensor 300 and one or more component located within the cavity 315 of the housing 350. In some cases, the electrical contacts 340 may be connected to one or more of the electrical circuits 330 and/or the sensor apparatus 10 using one or more of the electrical contacts 332 and 334. In some cases, the housing 350 may include an opening 354 for allowing a pressure to be applied to a bottom surface 362 (and/or top surface) of the sense diaphragm 26.

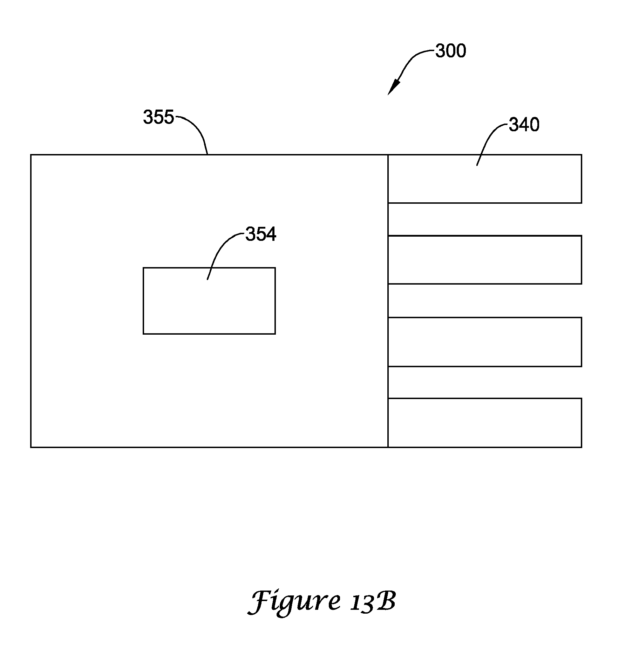

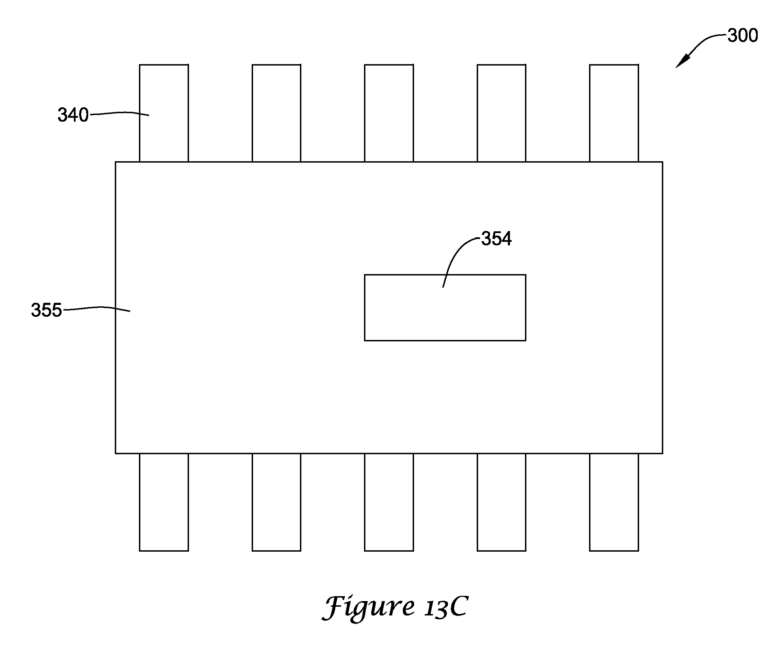

Figure 13B and 13C show illustrative package views of the illustrative pressure sensor of Figure 13A. In these examples, the opening 354 over the bottom surface 362 of the sense diaphragm 26 may expose the bottom surface 362 of the sense diaphragm 26 to an externally applied pressure 356. In some cases, the base 355 of the housing 350 may form a surface mount technology (SMT) package. In other cases, the base 355 and/or the cover 353 of the housing 350 may form another integrated circuit packaging type, such as a small-outline integrated circuit (SOIC) package, a plastic leaded chip carrier (PLCC) package, a Single In-Line Package (SIP), Dual In-Line Package (DIP), a Ball Grid Array (BGA) package, or any other suitable package type. The base 355 and/or cover 353 may be formed using any suitable material including, for example, plastic, polyamide, ceramic, metal, or any other suitable material.

As shown in Figures 13A-13C, the base 355 may include one or more electrical connections 340. These electrical connections may include connections for a power supply, ground, and one or more output signals such as a single ended or a differential output signal. More generally, the electrical connections 340 may be used for transmitting and/or receiving power and/or other signals to/from the sensor apparatus 10. In some cases, the leads 340 may be formed of metal, but may also be made of any suitable conductive material, such as a conductive polymer.

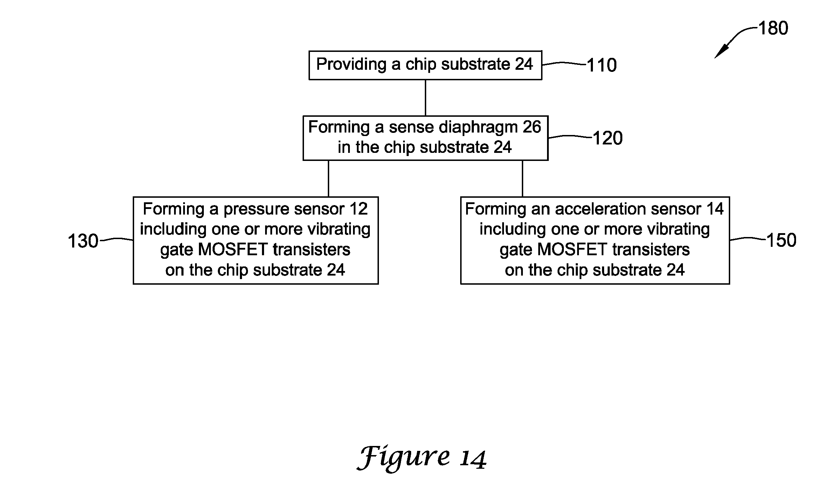

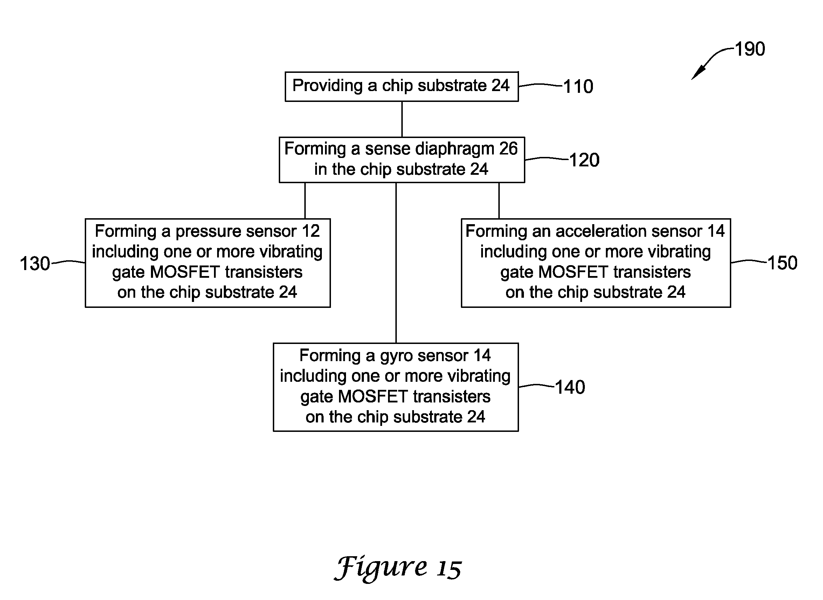

Figure 14 is a flowchart showing an illustrative technique 180, similar to the illustrative technique 100 of Figure 7, for fabricating the illustrative differential resonant acceleration sensor and differential pressure sensor system of Figures 8, 9, 11, 12, and 13A. Illustratively, the method 150 of fabricating the sensor or apparatus 10 (e.g., a SOI-CMOSFET MEMS/NEMS fabrication) may include providing 110 a multitude of wafers (e.g. SOI wafers), each wafer containing a chip substrate 24, forming 120 a sense diaphragm in the chip substrate 24, forming 130 a pressure sensor (e.g., a differential pressure sensor) having one or more resonant gate MOSFET transistors on the chip substrate 24, and forming 150 an acceleration sensor (e.g., a differential acceleration sensor) having one or more resonant gate MOSFET transistors on the chip substrate 24. In some cases, a method 190 of Figure 15 may include forming a pressure sensor 130, forming an acceleration sensor 150, and forming 140 a gyro sensor (e.g., a differential resonant gyro sensor) having one or more resonant gate transistors on the chip substrate 24, as discussed with Figures 7 and 14.

In some cases, the wafer may include a SOI wafer having a silicon substrate 24a, a buried oxide layer 24b on the silicon substrate 24a, and a single crystal silicon layer 24c on the buried oxide layer 24b. The design of the wafer is not limited to the example disclosed, but rather, the design may include any desired number of layers, the layer(s) may be any desired material, and the layer(s) may be in any desired order. Where the wafer containing chip substrates 24 is a SOI wafer, the sense diaphragm 26 may be formed by etching away, or through one or more other forming techniques, at least a part of the silicon chip substrate 24a of the SOI wafer, while leaving at least some of the silicon substrate 24a, the buried oxide layer 24b and the silicon single crystal layer 24c. The formed pressure sensor 12 may be a vibrating gate SOI-CMOSFET differential resonant pressure sensor 12 that may be supported by and/or positioned on the sense diaphragm 26. The formed acceleration sensor 80 may be a vibrating gate SOI-CMOSFET differential resonant acceleration sensor 80 that may be supported by the SOI wafer 24 and/or positioned on the SOI wafer containing the chip substrate 24 laterally adjacent to the sense diaphragm 26.

Illustratively, forming 130 the pressure sensor (e.g., the vibrating gate SOI-CMOSFET differential resonant pressure sensor) 12 on the sense diaphragm 26 may include doping at least a part of the single crystal layer 24c above the sense diaphragm 26, removing at least part of the single crystal layer 24c above the sense diaphragm 26, and removing at least part of the buried oxide layer 24b adjacent (e.g., below) the removed part of the single crystal layer 24c. The doping of the single crystal-layer 24c may include extending the doping through substantially the entire thickness of the silicon single crystal layer 24c. The removing of at least part of the silicon single crystal layer 24c may be performed with an etching technique or other removal technique, where the removal of the single crystal layer 24c may result in a patterned single crystal layer 24c. In some instances, the removal of at least part of the buried oxide layer 24b of the chip substrate 24 may include the removal of at least part of the buried oxide layer 24b below a portion of the patterned single crystal layer 24c. The steps of doping at least part of the single ccrystal layer 24c above the sense diaphragm 26, the removing at least part of the single crystal layer 24c above the sense diaphragm 26 and removing at least part of the buried oxide layer 24b adjacent (e.g., below) the removed part of the single crystal layer 24c may be performed such that a first resonator 30a and a second resonator 30b may be formed.

Illustratively, at the chip level 16, as a unity cell of the wafer 110, forming 160 the acceleration sensor (e.g., the vibrating gate SOI-CMOSFET differential resonant acceleration sensor) 80 on the chip substrate (e.g., SOI chip substrate) 24 and laterally spaced from the diaphragm 26 may include doping at least part of the single crystal 24c (e.g. n type arsenic doping) adjacent (e.g., spaced laterally from) the sense diaphragm 26, removing at least part of the silicon single crystal layer 24c adjacent (e.g., spaced laterally from) the sense diaphragm 26, and removing at least a part of the buried oxide layer 24b adjacent (e.g., below) the removed part of the silicon single crystal layer 24c of the chip substrate 24, forming 148 of the gate oxide 21 on a portion of the sidewall of the single crystal silicon and vacuum packaging of the chip 16, so that resonators 30a-30h and vibrating proof masses to work at high quality factors and sensing accuracies. The doping of the silicon single crystal layer 24c adjacent to the sense diaphragm 26 may include extending the doping through substantially the entire thickness of the layer 24c.

The removing of at least part of the layer 24c may be performed with an etching technique or other removal technique, where the removal of the layer 24c may result in a patterned single crystal layer. In some instances, the removal of at least part of the buried oxide layer 24b of the wafer 24 may include the removal of at least part of the buried oxide 24b below a portion of the patterned silicon single crystal layer 24c. The steps of doping at least part of the silicon single crystal layer 24c adjacent the sense diaphragm 26, the removing at least part of the silicon single crystal layer 24c adjacent the sense diaphragm 26, and removing at least part of the buried oxide layer 24b adjacent (e.g., below) the removed part of the silicon single crystal layer 24c may be performed such that the fifth resonator 30e and the sixth resonator 30f may be formed. Optionally, the seventh resonator 30g and the eighth resonator 30h may similarly be formed. Forming the gate oxide 21 on the sidewall of the single crystal silicon film may be performed by thermal oxidation of silicon followed by removal of the silicon dioxide from the regions where it is not needed. Vacuum packaging of the resonant combination sensor apparatus 10, may be performed simultaneously for all chips 16 of the SOI wafer 110, by means of wafer level packaging technology for reducing the cost of processing.

Those skilled in the art will recognize that the present disclosure may be manifested in a variety of forms other than the specific embodiments described and contemplated herein. Accordingly, departure in form and detail may be made without departing from the scope and spirit of the present disclosure as described in the appended claims.

## Claims

1. A single chip differential resonant pressure and acceleration sensor apparatus comprising:
a substrate having a sense diaphragm;
a first resonator and a second resonator supported by the sense diaphragm;
a third resonator and a fourth resonator laterally spaced from the sense diaphragm and supported by the substrate; and
an inertial mass mechanically coupled to the third resonator and the fourth resonator.

2. The apparatus of claim 1, wherein the substrate is a Silicon On Insulator (SOI) substrate having a silicon substrate, a buried oxide layer on the silicon substrate, and a silicon epitaxial layer on the buried oxide layer, wherein the first resonator, the second resonator, the third resonator and the fourth resonator are each at least partially formed by the silicon epitaxial layer.

3. The apparatus of claim 2, wherein at least part of the silicon epitaxial layer that forms at least part of the first resonator, the second resonator, the third resonator and the fourth resonator is suspended above the silicon substrate by removing the buried oxide layer below.

4. The apparatus of claim 1, wherein one or more of the first resonator, the second resonator, the third resonator, and the fourth resonator are double ended tuning fork resonators.

5. The apparatus of claim 4, wherein the double ended tuning fork of the third resonator and the double ended tuning fork of the fourth resonator are situated along an acceleration axis, with the inertial mass situated between the double ended tuning fork of the third resonator and the double ended tuning fork of the fourth resonator.

6. The apparatus of claim 5, wherein:
the double ended tuning fork of the third resonator includes a first end affixed to the substrate and a second end affixed to the inertial mass; and
the double ended tuning fork of the fourth resonator includes a first end affixed to the substrate and a second end affixed to the inertial mass;
wherein the inertial mass is suspended over the substrate between the double ended tuning fork of the third resonator and the double ended tuning fork of the fourth resonator.

7. The apparatus of claim 1, wherein:
the first resonator is positioned adjacent a center of the sense diaphragm; and
the second resonator is positioned adjacent an edge of the sense diaphragm.

8. The apparatus of claim 1, wherein in the presence of an external pressure:
the first resonator is exposed to a tensile stress by the sense diaphragm; and
the second resonator is exposed to a compressive stress by the sense diaphragm.

9. The apparatus of claim 1, wherein:
the first resonator increases the resonance frequency of a first vibrating gate of a first vibrating gate MOSFET transistor in response to pressure applied to the apparatus; and
the second resonator decreases the resonance frequency of a second vibrating gate of a second vibrating gate MOSFET transistor in response to pressure applied to the apparatus; and
wherein in the presence of an acceleration of the inertial mass:
the third resonator is exposed to a compressive stress in the direction of the acceleration; and
the fourth resonator is exposed to a tensile stress in the direction of the acceleration.

10. The apparatus of claim 1, wherein:
a frequency of a drain current of a first vibrating gate MOSFET transistor of the first resonator increases in the presence of the pressure applied to the apparatus; and
a frequency of a drain current of a second vibrating gate MOSFET transistor of the second resonator decreases in the presence of the pressure applied to the apparatus; and
wherein in the presence of an acceleration of the apparatus:
a frequency of a drain current of a third vibrating gate MOSFET transistor of the third resonator is increasing or decreasing depending on a sign of the acceleration; and
a frequency of a drain current of a fourth vibrating gate MOSFET transistor of the fourth resonator is increasing or decreasing and is opposite with respect to the drain current of the third resonator.

11. The apparatus of claim 1, further comprising:
one or more demodulators in communication with one or more of the first resonator, the second resonator, the third resonator and the fourth resonator; and
wherein one or more load resistances from output circuits of one or more vibrating gate MOSFET transistors associated with one or more of the first resonator, the second resonator, the third resonator, and the fourth resonator are configured to convert a drain current of the corresponding vibrating gate MOSFET transistor to one or more frequency modulated voltages.

12. The apparatus of claim 11, wherein:
at the output of demodulators corresponding to the first resonator and the second resonator, the frequency modulated voltages from the first resonator and the second resonator generate a voltage which is related to the frequency difference of the first resonator and the second resonator, which is related to the pressure applied to the apparatus; and
at the output of demodulators corresponding to the third resonator and the second resonator, the frequency modulated voltages from the third resonator and the fourth resonator generate a voltage which is related to the acceleration applied to the apparatus.

13. A method for fabricating SOI-CMOSFET MEMS/NEMS fabrication, the method comprising:
providing an SOI wafer having a silicon substrate, a buried oxide layer on the silicon substrate, and a silicon epitaxial layer on the buried oxide layer;
forming a sense diaphragm by etching away at least part of the silicon substrate of the SOI wafer, leaving at least some of the silicon substrate below the buried oxide layer and the epitaxial layer;
forming a vibrating gate SOI-CMOSFET transistor differential pressure sensor on the sense diaphragm; and
forming a vibrating gate SOI-CMOSFET transistor differential acceleration sensor on the SOI wafer laterally adjacent to the sense diaphragm.

14. The method of claim 13, wherein forming the vibrating gate SOI-CMOSFET transistor differential pressure sensor on the sense diaphragm includes:
doping at least part of the epitaxial layer above the sense diaphragm, the doping extending through substantially the entire thickness of the epitaxial layer;
etching at least part of the epitaxial layer above the sense diaphragm to form a patterned epitaxial layer; and
removing at least part of the buried oxide layer below at least part of the patterned epitaxial layer.

15. The method of claim 13, wherein forming the vibrating gate SOI-CMOSFET transistor differential acceleration sensor on the SOI wafer laterally adjacent to the sense diaphragm includes:
doping at least part of the epitaxial layer laterally adjacent to the sense diaphragm, the doping extending through substantially the entire thickness of the epitaxial layer;
etching at least part of the epitaxial layer adjacent to the sense diaphragm to form a patterned epitaxial layer; and
removing at least part of the buried oxide layer below at least part of the patterned epitaxial layer.
